(19) Europäisches Patentamt
European Patent Office
Office européen des brevets

(11) EP 4 212 578 A1

(12) EUROPEAN PATENT APPLICATION
published in accordance with Art. 153(4) EPC

(43) Date of publication:
**19.07.2023 Bulletin 2023/29**

(21) Application number: **22825391.0**

(22) Date of filing: **20.06.2022**

(51) International Patent Classification (IPC):
***C08J 3/24*** (2006.01) ***C08J 3/12*** (2006.01)
***C08J 3/075*** (2006.01) ***C08K 3/22*** (2006.01)
***B29B 9/12*** (2006.01) ***C08F 2/01*** (2006.01)

(52) Cooperative Patent Classification (CPC):
**B29B 9/12; C08F 2/01; C08J 3/075; C08J 3/12; C08J 3/24; C08K 3/22**

(86) International application number:
**PCT/KR2022/008693**

(87) International publication number:
**WO 2022/265468 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 KR 20210079644**
**21.06.2021 KR 20210080233**

(71) Applicant: **Lg Chem, Ltd.**
**Seoul 07336 (KR)**

(72) Inventors:
- **PARK, Se Yeol**
  **Daejeon 34122 (KR)**
- **KIM, Gicheul**
  **Daejeon 34122 (KR)**
- **MIN, Yoon Jae**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) METHOD FOR PREPARING SUPER ABSORBENT POLYMER

(57) Provided is a method for preparing a superabsorbent polymer. More particularly, provided is a method for preparing a superabsorbent polymer having a reduced amount of coarse particles with a particle size of more than 850 μm and an improved water content, and exhibiting excellent absorption performances without deviation.

【FIG. 1】

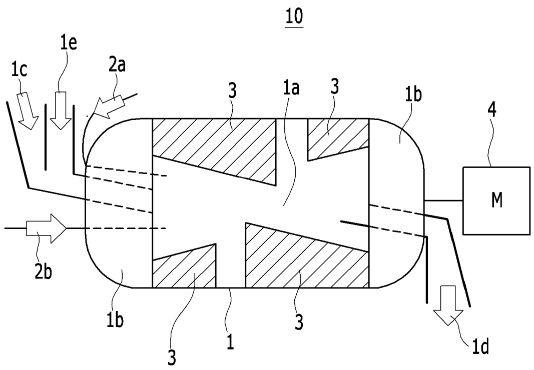




Processed by Luminess, 75001 PARIS (FR)

## Description

### [TECHNICAL FIELD]

Cross-reference to Related Application(s)

The present application is based on, and claims priority from, Korean Patent Application Nos. 10-2021-0079644, 10-2021-0080233, and 10-2022-0074732, filed on June 18, 2021, June 21, 2021, and June 20, 2022, respectively, the disclosures of which are hereby incorporated by reference herein in their entirety.

The present invention relates to a method for preparing a superabsorbent polymer. More particularly, the present invention relates to a method for preparing a superabsorbent polymer having a reduced amount of coarse particles with a particle size of more than 850 μm and an improved water content, and exhibiting excellent absorption performances without deviation.

### [BACKGROUND ART]

A superabsorbent polymer (SAP) is a synthetic polymeric material capable of absorbing moisture from 500 to 1000 times its own weight. Various manufacturers have denominated it as different names, such as SAM (Super Absorbency Material), AGM (Absorbent Gel Material), etc. Since such superabsorbent polymers started to be practically applied in sanitary products, now they have been widely used for water retaining soil products for gardening, water stop materials for the civil engineering and construction, sheets for raising seedling, fresh-keeping agents for food distribution fields, materials for poultice, etc.

In most cases, these superabsorbent polymers have been widely used in the field of sanitary materials such as diapers or sanitary napkins. Inside the sanitary materials, the superabsorbent polymer is generally distributed throughout pulp. However, recent efforts have been continuously made to provide sanitary materials such as diapers having a thinner thickness, etc., and as part of that, diapers having a reduced content of pulp, and furthermore, diapers having no pulp, so-called pulpless diapers are actively under development.

As described above, such a sanitary material having a reduced content of pulp or having no pulp includes the superabsorbent polymer at a relatively high ratio, and the superabsorbent polymer particles are inevitably included as multiple layers in the sanitary materials. In order to allow the whole superabsorbent polymer particles included as multiple layers to more efficiently absorb a large amount of liquid such as urine, etc., it is necessary that the superabsorbent polymer basically exhibits high absorption performance and high absorption rate.

On the other hand, such a superabsorbent polymer is generally prepared by the step of polymerizing an acrylic acid-based monomer to prepare a water-containing gel polymer containing a large amount of water, the step of drying the water-containing gel polymer, and the step of pulverizing the water-containing gel polymer into polymer particles having a desired particle size. To improve physical properties, a subsequent surface-crosslinking reaction may be selectively further performed.

In general, the surface crosslinking reaction is performed by spraying a surface crosslinking solution, in which a crosslinking agent is added to water, onto the surface of the superabsorbent polymer, and stirring the same, and then allowing the reaction by heating. However, since the surface crosslinking reaction by heating is usually performed at a high temperature of 140 °C or higher, most of water in the superabsorbent polymer is evaporated, and as a result, the water content of the superabsorbent polymer finally prepared is greatly lowered. Such a superabsorbent polymer having a low water content is prone to surface damage due to friction between particles during transport and storage, which ultimately leads to deterioration of physical properties of the superabsorbent polymer. In addition, generation of fine particles increases during a commercialization process using the superabsorbent polymer with the low water content, which reduces process stability and productivity, leading to deterioration of product quality.

Accordingly, there has been proposed a method of increasing the water content of the superabsorbent polymer by performing a hydrating process after surface crosslinking. As the method of hydrating for increasing the water content of the superabsorbent polymer, a direct injection method through a line and an injection method using a spray nozzle are mainly used. However, when water is injected through the line, the size of the droplet is large, and thus there is a problem in that a mixture of agglomerates of large particles with a high water content and general particles with a low water content is generated. In addition, when water is injected through the spray nozzle, the water content may be evenly increased, but flow occurs due to the small droplet size, which causes contamination of instrument and generation of foreign materials. In particular, as the diameter of the nozzle becomes smaller, the size of droplets generated during spraying becomes smaller. When the size of the droplet is too small, there is a problem of scattering and causing process contamination. In addition, when the diameter of the nozzle is large and when the flow rate is low, spraying is difficult and large droplets are formed. However, when the droplet size increases, it is difficult to evenly and sufficiently hydrate the superabsorbent polymer, and as a result, the physical properties of the superabsorbent polymer vary. In addition,

the droplets induce agglomeration between the surface-crosslinked polymer particles, resulting in generation of a large amount of coarse particles with a particle size of more than 850 μm in the final superabsorbent polymer, which leads to clogging of the bag filter and occurrence of caking during the process.

As another method to increase the water content of the superabsorbent polymer after surface crosslinking, a method of mixing with an additive such as silica, etc. has been proposed. However, since the mixing of the additive is usually performed by a dry method, homogeneous mixing is difficult, and as a result, physical properties and absorption performances of the superabsorbent polymer vary.

Accordingly, to fundamentally solve the above problems, there is a continuous demand for the development of a technology capable of preparing a superabsorbent polymer exhibiting excellent absorption performances without deviation by reducing generation of coarse particles and increasing the water content.

## [DETAILED DESCRIPTION OF THE INVENTION]

## [TECHNICAL PROBLEM]

Accordingly, there is provided a method for preparing a superabsorbent polymer having a reduced amount of coarse particles with a particle size of more than 850 μm and an improved water content, and exhibiting excellent absorption performances without deviation.

## [TECHNICAL SOLUTION]

To achieve the above object, there is provided a method for preparing a superabsorbent polymer, the method including the steps of:

forming a water-containing gel polymer, in which a water-soluble ethylenically unsaturated monomer having acidic groups and an internal crosslinking agent are crosslinking-polymerized,
preparing water-containing superabsorbent polymer particles by performing micronization of the water-containing gel polymer,
preparing dry superabsorbent polymer particles by drying the water-containing superabsorbent polymer particles,
forming a surface-crosslinked layer on at least a part of a surface of superabsorbent polymer particles by adding a surface crosslinking agent to the dry superabsorbent polymer particles and reacting them with each other, and
cooling and hydrating the superabsorbent polymer particles, on which the surface-crosslinked layer is formed, using a spade-type cooler,
wherein the spade-type cooler includes a rotatable body part including a transfer space through which the superabsorbent polymer particles on which the surface-crosslinked layer is formed are transferred; two nozzles installed in the body part, each injecting cooling air and water into the transfer space; one or more spade-type blades which are installed on an inner wall of the body part to be operable up and down and to scoop up the superabsorbent polymer particles, on which the surface-crosslinked layer is formed, in the transfer space; and a driving motor which is connected to the body part and provides a driving force, wherein the cooling and hydrating of the superabsorbent polymer particles, on which the surface-crosslinked layer is formed, are performed by scooping up the superabsorbent polymer particles, on which the surface-crosslinked layer is formed, by the spade-type blades in the body part, and then dropping the scooped-up superabsorbent polymer particles in the gravity direction by rotation of the body part to be brought into contact with the cooling air and the water which are injected into the transfer space of the body part.

There is also provided a superabsorbent polymer which is prepared by the method for preparing the superabsorbent polymer.

## [ADVANTAGEOUS EFFECTS]

According to a method for preparing a superabsorbent polymer of the present invention, it is possible to provide a superabsorbent polymer exhibiting excellent absorption performances without deviation.

In addition, during the preparation of the superabsorbent polymer, generation of coarse particles with a particle size of more than 850 μm is reduced, thereby minimizing the amount of dust generated in the preparation process. When absorbent articles are manufactured using the same, it is possible to improve processability such as prevention of bag filter clogging and prevention of caking, etc.

Accordingly, the superabsorbent polymer prepared by the above preparation method may be appropriately used for sanitary materials such as diapers, particularly, ultra-thin sanitary materials having a reduced content of pulp, etc.

[BRIEF DESCRIPTION OF DRAWINGS]

FIG. 1 shows a schematic illustration of a side cross-sectional structure of a spade-type cooler used in a method for preparing a superabsorbent polymer according to the present invention.
FIG. 2 shows a schematic illustration of a front structure of the spade-type cooler.
FIG. 3 shows a schematic illustration of a rear structure of the spade-type cooler.
FIG. 4 shows a schematic illustration of a mixing process that occurs in a body part of the spade-type cooler during the cooling and hydrating step in the method for preparing a superabsorbent polymer according to the present invention.

**[DETAILED DESCRIPTION OF THE EMBODIMENTS]**

The terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components, or combinations thereof beforehand.

Further, unless otherwise indicated, "room temperature" in this specification means 25±2 °C.

The present invention may be variously modified and have various forms, and specific exemplary embodiments are exemplified and explained in detail in the following description. However, it is not intended to limit the present invention to the specific exemplary embodiments and it must be understood that the present invention includes every modifications, equivalents, or replacements included in the spirit and technical scope of the present invention.

The present invention may be variously modified and have various forms, and specific exemplary embodiments are exemplified and explained in detail in the following description. However, it is not intended to limit the present invention to the specific exemplary embodiments and it must be understood that the present invention includes every modifications, equivalents, or replacements included in the spirit and technical scope of the present invention.

Hereinafter, a method for preparing a superabsorbent polymer according to the present invention and a superabsorbent polymer prepared thereby will be described in more detail.

In advance, the technical terms used in this description are just for explaining exemplary embodiments and it is not intended to restrict the present invention. The singular expression used herein may include the plural expression unless it is differently expressed contextually.

A method for preparing a superabsorbent polymer according to the present invention includes the steps of:

forming a water-containing gel polymer, in which a water-soluble ethylenically unsaturated monomer having acidic groups and an internal crosslinking agent are crosslinking-polymerized (step 1);
preparing water-containing superabsorbent polymer particles by performing micronization of the water-containing gel polymer (step 2);
preparing dry superabsorbent polymer particles by drying the water-containing superabsorbent polymer particles (step 3);
forming a surface-crosslinked layer on at least a part of a surface of superabsorbent polymer particles by adding a surface crosslinking agent to the dry superabsorbent polymer particles and reacting them with each other (step 4); and
cooling and hydrating the superabsorbent polymer particles, on which the surface-crosslinked layer is formed, using a spade-type cooler (step 5);
wherein the spade-type cooler includes a rotatable body part including a transfer space through which the superabsorbent polymer particles on which the surface-crosslinked layer is formed are transferred; two nozzles installed in the body part, each injecting cooling air and water into the transfer space; one or more spade-type blades which are installed on an inner wall of the body part to be operable up and down and to scoop up the superabsorbent polymer particles, on which the surface-crosslinked layer is formed, in the transfer space; and a driving motor which is connected to the body part and provides a driving force, wherein the cooling and hydrating of the superabsorbent polymer particles, on which the surface-crosslinked layer is formed, are performed by scooping up the superabsorbent polymer particles, on which the surface-crosslinked layer is formed, by the spade-type blades in the body part, and then dropping the scooped-up superabsorbent polymer particles in the gravity direction by rotation of the body part to be brought into contact with the cooling air and the water which are injected into the transfer space of the body part.

As used herein, the term "polymer" refers to a polymerized state of water-soluble ethylenically unsaturated

monomers, and may encompass those of all water content ranges or particle diameter ranges.

Further, as used herein, the term "superabsorbent polymer" refers to, depending on the context, a crosslinked polymer or a base polymer or water-containing gel polymer in the form of powder consisting of superabsorbent polymer particles obtained by pulverizing the crosslinked polymer, or is used to encompass those made suitable for commercialization by an additional process of the crosslinked polymer or the water-containing gel polymer, for example, drying, pulverizing, classifying, surface crosslinking, etc.

Further, as used herein, the term "normal particle" refers to a particle having a particle diameter (or particle size) of 150 μm to 850 μm among superabsorbent polymer particles, and the term "fine particle" refers to a particle having a particle diameter of less than 150 μm among superabsorbent polymer particles. In addition, the term "coarse particle" refers to a particle having a particle diameter of more than 850 μm among superabsorbent polymer particles. These particle diameters of the superabsorbent polymer particles may be measured according to the European Disposables and Nonwovens Association (EDANA) standard WSP 220.3 method.

As used herein, the term "chopping" refers to fragmentation of the water-containing gel polymer into small pieces of millimeter sizes in order to increase the efficiency of drying, and is distinguished from pulverization to the micrometer level or normal particle level.

In addition, the term "micronizing (micronization)" refers to pulverizing the water-containing gel polymer to a particle size of tens to hundreds of micrometers, and is distinguished from "chopping".

As a method of improving physical properties of the superabsorbent polymer, a method of forming a surface-crosslinked layer by treating the surface of the superabsorbent polymer particles with a surface crosslinking agent and then heating the same is mainly used.

However, since the surface crosslinking reaction for forming the surface-crosslinked layer is performed at a high temperature, the water contained in the superabsorbent polymer evaporates, and as a result, the water content of the superabsorbent polymer is greatly reduced. When the water content of the superabsorbent polymer is lowered, surface damage is likely to occur due to friction between particles during transport and storage, and as a result, physical properties of the superabsorbent polymer deteriorate. In addition, when commercialization is performed using the superabsorbent polymer with a low water content, generation of fine particles increases during the process, resulting in reduced process stability and productivity, and deterioration of product quality.

In order to solve this problem, there has been proposed a method of increasing the water content of the superabsorbent polymer by performing the cooling and hydrating processes after surface crosslinking, or by mixing with an inorganic material having hygroscopicity. However, in the traditional hydrating method, droplets generated during the hydrating process induce agglomeration between surface-crosslinked superabsorbent polymer particles, and as a result, large amounts of coarse particles having a large particle diameter are generated in the final superabsorbent polymer, which deteriorates physical properties of the superabsorbent polymer and induces deviation thereof, and causes bag filter clogging and caking during the commercialization process. In addition, since the method of mixing with an inorganic material is usually performed by a dry mixing method, it is difficult to achieve uniform mixing, resulting in deviations in the physical properties and absorption performances of the superabsorbent polymer.

Accordingly, the present inventors have identified that when the superabsorbent polymer is uniformly hydrated, it is possible to prevent deterioration and deviation of the physical properties of the superabsorbent polymer and to reduce generation of coarse particles, and they focused on the fact that when a spade-type cooler is used, cooling and hydrating of the superabsorbent polymer may be performed at the same time, and the uniform treatment may be achieved throughout the superabsorbent polymer particles.

In addition, the superabsorbent polymer prepared by the preparation method for the present invention may have an increased water content, a low content of coarse particles, excellent absorption properties such as water retention capacity and absorbency under pressure, and improved rewetting property and absorption rate without deviation.

Hereinafter, each step of the method for preparing a superabsorbent polymer according to the present invention will be described in more detail.

**Step 1**

The step 1 is a step of forming a water-containing gel polymer, in which a water-soluble ethylenically unsaturated monomer having acidic groups and an internal crosslinking agent are crosslinking-polymerized.

Specifically, the water-containing gel polymer may be prepared by a method including the step of neutralizing at least part of the acidic groups of the water-soluble ethylenically unsaturated monomer, and the step of forming the water-containing gel polymer by performing polymerization of a monomer composition which is prepared by mixing the water-soluble ethylenically unsaturated monomer having at least partially neutralized acidic groups with an internal crosslinking agent and a polymerization initiator (Method 1), or a method including the step of forming a polymer, in which the water-soluble ethylenically unsaturated monomer having acidic groups and the internal crosslinking agent are crosslinking-polymerized, by performing polymerization of the monomer composition including the water-soluble ethylenically unsaturated monomer having acidic groups, the internal crosslinking agent, and the polymerization initiator, and the step of forming the water-containing gel polymer by neutralizing at least part of the acidic groups of the polymer (Method 2).

In Method 1, before polymerization of the water-soluble ethylenically unsaturated monomer, at least part of the acidic groups in the monomer is neutralized, and then polymerization is performed. The polymer prepared by Method 1 has a water retention property to absorb surrounding water, and thus it may be generally prepared in the form of a water-containing gel polymer having a high water content of 30% by weight or more.

In contrast, in Method 2, before neutralizing the acidic groups of the water-soluble ethylenically unsaturated monomer, polymerization is first performed to form the polymer, and then the acidic groups present in the polymer are neutralized. The polymer formed after polymerization exhibits a low water retention property, and as a result, the polymer exists as a solid state with little water absorption in the monomer composition. However, it has a water retention property by the subsequent neutralization process, and becomes the water-containing gel polymer.

Further, in Method 2, the water-soluble ethylenically unsaturated monomer, of which acidic groups are not neutralized, (e.g., acrylic acid) is in a liquid state at room temperature, and its solubility or miscibility in a solvent (water) is high, and thus it does not precipitate even at a low temperature. Accordingly, it is advantageous for a long-time polymerization at a low temperature, and a polymer having a high molecular weight and a uniform molecular weight distribution may be stably formed.

Further, water-soluble components, which are usually generated during the preparation of polymers, are easily eluted when the superabsorbent polymer comes into contact with a liquid. Therefore, when the content of the water-soluble components is high, most of the eluted water-soluble components remains on the surface of the superabsorbent polymer, making the superabsorbent polymer sticky, which causes a decrease in liquid permeability. Therefore, it is important to maintain the low content of the water-soluble components in terms of liquid permeability. As in Method 2, when polymerization is first performed in an unneutralized state, a longer-chain polymer may be formed, and the content of the water-soluble components present in an uncrosslinked state due to incomplete polymerization or crosslinking may be reduced, and as a result, the liquid permeability of the superabsorbent polymer may be improved.

Also, as in Method 2, when polymerization is first performed to form the polymer before neutralizing the acidic groups of the acrylic monomer, and micronization is performed in the presence of a surfactant after neutralization, or micronization is performed in the presence of the surfactant, followed by neutralization, or micronization and neutralization of the acidic groups present in the polymer are performed at the same time, a large amount of the surfactant is present on the surface of the polymer to lower adhesiveness of the polymer, thereby preventing agglomeration between the polymer particles. As a result, it is possible to pulverize the polymer to the size level of normal particles during the micronization process, and since the drying process is performed after pulverizing to the size level of normal particles, the amount of fine particles generated during the process may be significantly reduced.

Accordingly, it is preferable that the method for preparing the water-containing gel polymer is appropriately selected from Method 1 and Method 2 by considering the subsequent process and conditions.

Specifically, Method 1 includes the step of neutralizing at least part of the acidic groups of the water-soluble ethylenically unsaturated monomer, and the step of forming the water-containing gel polymer by performing polymerization of a monomer composition including the water-soluble ethylenically unsaturated monomer having at least partially neutralized acidic groups, the internal crosslinking agent, and the polymerization initiator.

The water-soluble ethylenically unsaturated monomer may be any monomer commonly used in the preparation of the superabsorbent polymer. For non-limiting example, the water-soluble ethylenically unsaturated monomer may be a compound represented by the following Chemical Formula 1:

[Chemical Formula 1] R-COOM'

wherein, in Chemical Formula 1,

R is an alkyl group having 2 to 5 carbon atoms including an unsaturated bond, and
M' is a hydrogen atom, a monovalent or divalent metal, an ammonium group, or an organic amine salt.

Preferably, the monomer may be one or more selected from the group consisting of (meth)acrylic acid, and a monovalent (alkali) metal salt, a divalent metal salt, an ammonium salt, and an organic amine salt thereof.

When (meth)acrylic acid and/or a salt thereof is used as the water-soluble ethylenically unsaturated monomer, it is advantageous in that a superabsorbent polymer having improved absorption property may be obtained. In addition, as the monomer, maleic anhydride, fumaric acid, crotonic acid, itaconic acid, 2-acryloylethanesulfonic acid, 2-methacryloylethanesulfonic acid, 2-(meth)acryloylpropane sulfonic acid, or 2-(meth)acrylamido-2-methylpropane sulfonic acid, (meth)acrylamide, N-substituted (meth)acrylate, 2-hydroxyethyl(meth)acrylate, 2-hydroxypropyl(meth)acrylate, methoxypolyethylene glycol(meth)acrylate, polyethylene glycol (meth)acrylate, (N,N)-dimethylaminoethyl(meth)acrylate,

(N,N)-dimethylaminopropyl(meth)acrylamide, etc. may be used.

The water-soluble ethylenically unsaturated monomer has acidic groups, of which at least part may be neutralized by a neutralizing agent.

With regard to the preparation method according to the present invention, in Method 1, neutralization of at least part of the acidic groups of the water-soluble ethylenically unsaturated monomer may be performed during the process of preparing the monomer composition by mixing the water-soluble ethylenically unsaturated monomer having acidic groups, the internal crosslinking agent, the polymerization initiator, and the neutralizing agent. The monomer composition thus prepared includes the water-soluble ethylenically unsaturated monomer having at least partially neutralized acidic groups, the internal crosslinking agent, and the polymerization initiator.

During the neutralization, the concentration of the water-soluble ethylenically unsaturated monomer having acidic groups may be appropriately determined in consideration of the polymerization time, the reaction conditions, etc. in the subsequent polymerization reaction step. For example, in the present invention, the concentration of the water-soluble ethylenically unsaturated monomer in the mixture including the water-soluble ethylenically unsaturated monomer having acidic groups, the internal crosslinking agent, the polymerization initiator, and the neutralizing agent may be 20% by weight to 60% by weight, specifically, 20% by weight or more, and 60% by weight or less, or 40% by weight or less.

In addition, as the neutralizing agent, one or more basic substances capable of neutralizing acidic groups, such as sodium hydroxide, potassium hydroxide, ammonium hydroxide, etc., may be used.

The degree of neutralization of the acidic groups included in the water-soluble ethylenically unsaturated monomer by the neutralizing agent is called the degree of neutralization of the water-soluble ethylenically unsaturated monomer. An excessively high degree of neutralization causes the neutralized monomers to be precipitated, and thus polymerization may not readily occur, whereas an excessively low degree of neutralization not only greatly deteriorates the absorbency of the polymer, but also endows the polymer with hard-to-handle properties, such as those of an elastic rubber. Therefore, it is preferable that the degree of neutralization of the water-soluble ethylenically unsaturated monomers may be appropriately determined according to physical properties of the superabsorbent polymer to be achieved. For example, in the present invention, the degree of neutralization of the water-soluble ethylenically unsaturated monomers may be 50 mol% to 90 mol%, more specifically 50 mol% or more, or 60 mol% or more, or 65 mol% or more, and 90 mol% or less, or 85 mol% or less, or 80 mol% or less, or 75 mol% or less.

Meanwhile, as used herein, the term 'internal crosslinking agent' is a term used to distinguish it from a surface crosslinking agent for crosslinking the surface of the superabsorbent polymer particles, described below. In the present invention, the internal crosslinking agent serves to form a polymer including a cross-linked structure by introducing a cross-linkage between unsaturated bonds of the above-described water-soluble ethylenically unsaturated monomers.

The crosslinking occurs regardless of the surface or inside of the polymer. However, when the surface crosslinking process of the superabsorbent polymer particles described below is performed, the surface of the superabsorbent polymer particles finally prepared may include a structure newly crosslinked by the surface crosslinking agent, and the inside of the superabsorbent polymer particles may intactly maintain a structure crosslinked by the internal crosslinking agent.

As the internal crosslinking agent, one or more of multifunctional acrylate-based compounds, multifunctional allyl-based compounds, and multifunctional vinyl-based compounds may be used.

The multifunctional acrylate-based compounds may specifically include ethylene glycol di(meth)acrylate, diethylene glycol di(meth)acrylate, triethylene glycol di(meth)acrylate, tetraethylene glycol di(meth)acrylate, polyethylene glycol diacrylate, polyethylene glycol di(meth)acrylate, propylene glycol di(meth)acrylate, tripropylene glycol di(meth)acrylate, polypropylene glycol di(meth)acrylate, butanediol di(meth)acrylate, butylene glycol di(meth)acrylate, hexanediol di(meth)acrylate, pentaerythritol di(meth)acrylate, pentaerythritol tri(meth)acrylate, pentaerythritol tetra(meth)acrylate, dipentaerythritol di(meth)acrylate, dipentaerythritol tri(meth)acrylate, dipentaerythritol tetra(meth)acrylate, dipentaerythritol penta(meth)acrylate, trimethylolpropane di(meth)acrylate, trimethylolpropane tri(meth)acrylate, glycerin di(meth)acrylate, glycerin tri(meth)acrylate, etc., and any one thereof or a mixture of two or more thereof may be used.

Further, the multifunctional allyl-based compounds may specifically include ethylene glycol diallyl ether, diethylene glycol diallyl ether, triethylene glycol diallyl ether, tetraethylene glycol diallyl ether, polyethylene glycol diallyl ether, propylene glycol diallyl ether, tripropylene glycol diallyl ether, polypropylene glycol diallyl ether, butanediol diallyl ether, butylene glycol diallyl ether, hexanediol diallyl ether, pentaerythritol diallyl ether, pentaerythritol triallyl ether, pentaerythritol tetraallyl ether, dipentaerythritol diallyl ether, dipentaerythritol triallyl ether, dipentaerythritol tetraallyl ether, dipentaerythritol pentaallyl ether, trimethylolpropane diallyl ether, trimethylolpropane triallyl ether, glycerin diallyl ether, glycerin triallyl ether, etc., and any one thereof or a mixture of two or more thereof may be used.

Further, the multifunctional vinyl-based compounds may specifically include ethylene glycol divinyl ether, diethylene glycol divinyl ether, triethylene glycol divinyl ether, tetraethylene glycol divinyl ether, polyethylene glycol divinyl ether, propylene glycol divinyl ether, tripropylene glycol divinyl ether, polypropylene glycol divinyl ether, butanediol divinyl ether, butylene glycol divinyl ether, hexanediol divinyl ether, pentaerythritol divinyl ether, pentaerythritol trivinyl ether, pentaerythritol tetravinyl ether, dipentaerythritol divinyl ether, dipentaerythritol trivinyl ether, dipentaerythritol tetravinyl

ether, dipentaerythritol pentavinyl ether, trimethylolpropane divinyl ether, trimethylolpropane trivinyl ether, glycerin divinyl ether, glycerin trivinyl ether, etc., and any one thereof or a mixture of two or more thereof may be used.

In the multifunctional allyl-based compounds and the multifunctional vinyl-based compounds, two or more unsaturated groups included in the molecule bind with unsaturated bonds of the water-soluble ethylenically unsaturated monomers or unsaturated bonds of other internal crosslinking agents, respectively, thereby forming a crosslinked structure during the polymerization process and stably maintaining the crosslinking even during the neutralization process after the above-described polymerization reaction, unlike acrylate-based compounds including ester bonds (-(C=O)O-) in the molecule. Accordingly, a gel strength of the superabsorbent polymer to be prepared may be increased, process stability may be increased during a discharging process after polymerization, and the amount of water-soluble components may be minimized.

The internal crosslinking agent may be used in an amount of 0.01 part by weight to 5 parts by weight with respect to 100 parts by weight of the water-soluble ethylenically unsaturated monomer. For example, the internal crosslinking agent may be used in an amount of 0.01 part by weight or more, or 0.05 parts by weight or more, or 0.1 part by weight or more, and 5 parts by weight or less, or 3 parts by weight or less, or 2 parts by weight or less, or 1 part by weight or less, or 0.7 parts by weight or less with respect to 100 parts by weight of the water-soluble ethylenically unsaturated monomer. When the content of the internal crosslinking agent is too low, crosslinking does not occur sufficiently, and thus it may be difficult to achieve the strength above the appropriate level, and when the content of the internal crosslinking agent is too high, it may be difficult to achieve the desired water retention capacity due to the increased internal crosslinking density.

The polymer formed using the internal crosslinking agent has a three-dimensional network structure in which main chains formed by polymerization of the water-soluble ethylenically unsaturated monomers are crosslinked by the internal crosslinking agent. As described, when the polymer has the three-dimensional network structure, water retention capacity and absorbency under pressure, which are general physical properties of the superabsorbent polymer, may be remarkably improved, as compared to a two-dimensional linear structure, in which additional crosslinking by the internal crosslinking agent does not occur.

Further, during preparation of the monomer composition, it preferable that the polymerization initiator is appropriately selected according to the polymerization method.

When a thermal polymerization method is employed during formation of the water-containing gel polymer, a thermal polymerization initiator is used. When a photo-polymerization method is employed, a photo-polymerization initiator is used. When a hybrid polymerization method (a method of using both heat and light) is employed, both the thermal polymerization initiator and the photo-polymerization initiator may be used. However, even in the case of the photo-polymerization method, a certain amount of heat is generated by light irradiation such as ultraviolet irradiation, etc., and a certain amount of heat is generated according to the progression of the polymerization reaction, which is an exothermic reaction, and therefore, the thermal polymerization initiator may be additionally used.

The photo-polymerization initiator may be used without limitation in view of constitution as long as it is a compound capable of forming a radical by light such as ultraviolet rays.

The photo-polymerization initiator may include, for example, one or more selected from the group consisting of benzoin ether, dialkyl acetophenone, hydroxyl alkylketone, phenyl glyoxylate, benzyl dimethyl ketal, acyl phosphine, and $\alpha$-aminoketone. Further, specific examples of the acyl phosphine may include diphenyl(2,4,6-trimethylbenzoyl)phosphine oxide, phenylbis(2,4,6-trimethylbenzoyl)phosphine oxide, ethyl(2,4,6-trimethylbenzoyl)phenylphosphinate, etc. More various photo-polymerization initiators are well disclosed in "UV Coatings: Basics, Recent Developments and New Application(Elsevier, 2007)" written by Reinhold Schwalm, p 115, however, the photo-polymerization initiator is not limited to the above-described examples.

Further, as the thermal polymerization initiator, one or more selected from the group consisting of a persulfate-based initiator, an azo-based initiator, hydrogen peroxide, and ascorbic acid may be used. Specific examples of the persulfate-based initiator may include sodium persulfate ($Na_2S_2O_8$), potassium persulfate ($K_2S_2O_8$), ammonium persulfate ($(NH_4)_2S_2O_8$), etc., and examples of the azo-based initiator may include 2,2-azobis-(2-amidinopropane)dihydrochloride, 2,2-azobis-(N,N-dimethylene)isobutyramidine dihydrochloride, 2-(carbamoylazo)isobutyronitrile, 2,2-azobis[2-(2-imidazolin-2-yl)propane]dihydrochloride, 4,4-azobis-(4-cyanovaleric acid), etc. More various thermal polymerization initiators are well disclosed in 'Principle of Polymerization (Wiley, 1981)' written by Odian, p 203, however, the thermal polymerization initiator is not limited to the above-described examples.

The polymerization initiator may be used in an amount of 2 parts by weight or less with respect to 100 parts by weight of the water-soluble ethylenically unsaturated monomer. In other words, when the concentration of the polymerization initiator is too low, the polymerization rate may become slow, and a large amount of residual monomer may be extracted in the final product, which is not preferred. On the contrary, when the concentration of the polymerization initiator is higher than the above range, polymer chains constituting the network become short, and thus the content of water-soluble components is increased and physical properties of the polymer may deteriorate, such as a reduction in absorbency under pressure, which is not preferred.

In addition, when preparing the monomer composition, a reducing agent forming a redox couple with the polymerization initiator may be further introduced.

Specifically, when the polymerization initiator and the reducing agent are added to the polymer solution, they react with each other to form radicals. The formed radicals react with the monomer. Since the oxidation-reduction reaction between the polymerization initiator and the reducing agent is highly reactive, the polymerization starts even though only small amounts of the polymerization initiator and the reducing agent are added, and thus there is no need to increase the process temperature. Accordingly, a low-temperature polymerization is possible, and changes in the physical properties of the polymer solution may be minimized.

The polymerization reaction using the oxidation-reduction reaction may smoothly occur even at a temperature near or below room temperature (25°C). For example, the polymerization reaction may be carried out at a temperature of 5 °C or higher and 25 °C or lower, or 5 °C or higher and 20 °C or lower.

When a persulfate-based polymerization initiator is used as the polymerization initiator, one or more selected from the group consisting of sodium metabisulfite ($Na_2S_2O_5$); tetramethyl ethylenediamine (TMEDA); iron(II) sulfate ($FeSO_4$); a mixture of iron(II) sulfate and EDTA ($FeSO_4$/EDTA); sodium formaldehyde sulfoxylate; and disodium 2-hydroxy-2-sulfinoacetate may be used as the reducing agent.

Further, potassium persulfate is used as the polymerization initiator, and disodium 2-hydroxy-2-sulfinoacetate is used as the reducing agent; or ammonium persulfate is used as the polymerization initiator and tetramethylethylenediamine is used as the reducing agent; or sodium persulfate may be used as the polymerization initiator, and sodium formaldehyde sulfoxylate may be used as the reducing agent.

When a peroxide-based initiator is used as the polymerization initiator, one or more selected from the group consisting of ascorbic acid; sucrose; sodium sulfite ($Na_2SO_3$), sodium metabisulfite ($Na_2S_2O_5$); tetramethyl ethylenediamine (TMEDA); a mixture of iron(II) sulfate and EDTA ($FeSO_4$/EDTA); sodium formaldehyde sulfoxylate; disodium 2-hydroxy-2-sulfinoacteate; and disodium 2-hydroxy-2-sulfoacteate may be used as the reducing agent.

Further, during the preparation of the monomer composition, an additive such as a thickener, a plasticizer, a preservation stabilizer, an antioxidant, etc., may be further introduced, as needed.

In the present invention, the monomer composition may be, for example, in a solution state, in which it is dissolved in a solvent such as water. The solid content of the monomer composition in the solution state, that is, the concentration of the monomer, the internal crosslinking agent, and the polymerization initiator, may be appropriately controlled in consideration of the polymerization time, the reaction conditions, etc. For example, the solid content in the monomer composition may be 10% by weight to 80% by weight, or 15% by weight to 60% by weight, or 30% by weight to 50% by weight. When the monomer composition has the solid content in the above range, it may be advantageous in controlling the pulverization efficiency during pulverization of the polymer to be described later while there is no need to remove unreacted monomers after polymerization by using a gel effect phenomenon that occurs in the polymerization reaction of an aqueous solution at a high concentration.

As the solvent to be applicable, any solvent may be used without limitations in view of constitution as long as it is able to dissolve the above components. For example, water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, and N,N-dimethylacetamide, or a mixture thereof may be used as the solvent.

Next, the polymerization process of the monomer composition may be performed without particular limitations in view of constitution as long as it is able to form the water-containing gel polymer by thermal polymerization, photopolymerization, or hybrid polymerization.

Specifically, the polymerization method is largely classified into thermal polymerization and photo-polymerization according to a polymerization energy source. When the thermal polymerization is carried out, it may be commonly carried out in a reactor like a kneader equipped with agitating spindles. When the photo-polymerization is carried out, it may be carried out in a reactor equipped with a movable conveyor belt or in a flat-bottomed vessel.

In the polymerization method as described above, a polymer of which molecular weight is not large and molecular weight distribution is wide may be generally formed according to a short polymerization reaction time (e.g., 1 hour or shorter).

For example, the water-containing gel polymer which is obtained by performing thermal polymerization by providing hot air into the reactor like a kneader equipped with the agitating spindles as described above, or by heating the reactor is discharged at a size of centimeters or millimeters from the outlet of the reactor according to the type of agitating spindles equipped in the reactor. Specifically, the water-containing gel polymer may be obtained in various forms according to the concentration of the monomer composition fed thereto, the feeding speed, etc., and the water-containing gel polymer having a weight average particle diameter of 2 mm to 50 mm may be generally obtained.

Further, as described above, when the photo-polymerization is carried out in a reactor equipped with a movable conveyor belt or in a flat-bottomed vessel, the obtained water-containing gel polymer may be usually a sheet-like water-containing gel polymer having a width of the belt. In this case, the thickness of the polymer sheet may vary depending on the concentration of the monomer composition fed thereto and the feeding speed or feeding amount, and usually, it is preferable to supply the monomer composition such that a sheet-like polymer having a thickness of about 0.5 cm to about 5 cm may be obtained. When the monomer composition is supplied to such an extent that the thickness of the sheet-like polymer becomes too thin, it is undesirable because the production efficiency is low, and when the thickness of the sheet-like polymer is more than 5 cm, the polymerization reaction may not evenly occur over the entire thickness because of the excessive thick thickness.

In addition, in the traditional polymerization in a reactor having agitating spindles, equipped with a conveyor belt, a new monomer composition is supplied to the reactor while the polymerization product moves, and thus polymerization continuously occurs, and polymers having different polymerization rates are mixed. Accordingly, uniform polymerization hardly occurs throughout the monomer composition, and overall physical properties may deteriorate.

For this reason, in the preparation method of the present invention, the polymerization reaction of the monomer composition may be performed in a batch-type reactor.

As described above, as the polymerization is performed in a fixed-bed type in the batch-type reactor, there is little risk of mixing of polymers with different polymerization rates, and as a result, a polymer having uniform quality may be obtained.

In addition, when the polymerization is performed in the batch-type reactor, it may be performed for a longer period of time, for example, 3 hours or longer than polymerization continuously performed in the reactor equipped with the conveyor belt. However, despite the long polymerization time as described above, since the polymerization is performed for the water-soluble ethylenically unsaturated monomer in an unneutralized state, the monomer is not easily precipitated even after the long-time polymerization, and thus it is advantageous for the long-time polymerization.

Meanwhile, in the polymerization in the batch-type reactor, a thermal polymerization method may be employed, and thus a thermal polymerization initiator is used as the polymerization initiator. The thermal polymerization initiator is the same as described above.

In contrast, Method 2 of preparing the water-containing gel polymer may be performed by the step of forming the polymer, in which the water-soluble ethylenically unsaturated monomer having acidic groups and the internal crosslinking agent are crosslinking-polymerized, by performing polymerization of the monomer composition including the water-soluble ethylenically unsaturated monomer having acidic groups, internal crosslinking agent, and polymerization initiator, and the step of forming the water-containing gel polymer by neutralizing at least part of the acidic groups of the polymer.

In Method 2, the preparation of the monomer composition and the polymerization process thereof may be performed in the same manner as in Method 1, except that a water-soluble ethylenically unsaturated monomer, of which acidic groups are not neutralized, is used during the preparation of the monomer composition.

In addition, the polymerization reaction in Method 2 may be specifically performed in the batch-type reactor. In addition, since the polymerization in the batch-type reactor employs the thermal polymerization method, a thermal polymerization initiator may be used as the polymerization initiator. In addition, as described above, the polymerization may be initiated by adding a reducing agent together with the initiator.

Next, in Method 2, the step of forming the water-containing gel polymer by neutralizing at least part of the acidic groups of the crosslinked polymer may be performed by adding a neutralizing agent to the crosslinked polymer and reacting them with each other.

As in Method 1, basic substances capable of neutralizing acidic groups, such as sodium hydroxide, potassium hydroxide, ammonium hydroxide, etc., may be used as the neutralizing agent.

Further, when the degree of neutralization of the polymer indicating the degree of neutralization of the acidic groups included in the polymer by the neutralizing agent is too high, the concentration of carboxyl groups on the particle surface is too low, making it difficult to perform proper surface crosslinking in the subsequent process, and as a result, absorbency under pressure and liquid permeability may be reduced. On the contrary, an excessively low degree of neutralization of the polymer not only greatly deteriorates the absorbency of the polymer, but also endows the polymer with hard-to-handle properties, such as those of an elastic rubber. Therefore, it is preferable that the degree of neutralization of the polymer is appropriately selected according to physical properties of the superabsorbent polymer to be achieved. For example, in the present invention, the degree of neutralization of the polymer may be 50 mol% to 90 mol%, more specifically 50 mol% or more, or 60 mol% or more, or 65 mol% or more, and 90 mol% or less, or 85 mol% or less, or 80 mol% or less, or 75 mol% or less.

The polymer prepared according to Method 1 or Method 2 may be in a water-containing gel state, and may have a water content of 30% by weight to 80% by weight, more specifically, 30% by weight or more, or 35% by weight or more, or 40% by weight or more, and 80% by weight or less, or 75% by weight or less, or 70% by weight or less.

When the water content of the water-containing gel polymer is too low, the water-containing gel polymer may not be effectively pulverized because it is difficult to secure an appropriate surface area in the subsequent pulverization step. When the water content of the water-containing gel polymer is too high, it is difficult to pulverize the water-containing

gel polymer to the desired particle size, because the pressure applied in the subsequent pulverization step increases. However, the water-containing gel polymer prepared by the preparation method according to the present invention has a water content satisfying the above-mentioned range, and is suitable for the subsequent micronization process.

Meanwhile, as used herein, the "water content" means a weight occupied by water with respect to a total weight of the water-containing gel polymer, which may be a value obtained by subtracting the weight of the dried polymer from the weight of the water-containing gel polymer. Specifically, the water content may be defined as a value calculated by measuring the weight loss due to evaporation of moisture in the polymer during the process of drying by raising the temperature of the polymer in a crumb state through infrared heating. At this time, the drying conditions may be determined as follows: the drying temperature is increased from room temperature to about 180°C and then the temperature is maintained at 180°C, and the total drying time is set to 40 minutes, including 5 minutes for the temperature rising step. Detailed measurement method and conditions are the same as in Experimental Example below.

**Step 2**

Next, the step 2 is a step of preparing water-containing superabsorbent polymer particles by performing micronization of the water-containing gel polymer prepared in the step 1.

In the above step, shredding of the water-containing gel polymer to a size of several ten micrometers to several hundred micrometers and agglomeration thereof are performed at the same time, rather than chopping the water-containing gel polymer to a size of millimeters. In other words, the step 2 is a step of preparing secondary agglomerated particles, in which a plurality of primary particles shredded to a size of several ten micrometers to several hundred micrometers are agglomerated, by providing appropriate adhesiveness for the water-containing gel polymer. The water-containing superabsorbent polymer particles, which are secondary agglomerated particles prepared in the above step, have a normal particle size distribution and their surface area is greatly increased, and thus the absorption rate may be remarkably improved.

Specifically, in the preparation method of the present invention, the step of preparing water-containing superabsorbent polymer particles by performing micronization of the polymer may be performed twice or more, more specifically, 2 to 4 times.

The micronization step may be performed by a micronizer, which may include a body part including a transfer space through which the polymer is transferred; a screw member which is rotatably installed inside the transfer space to transfer the polymer; a driving motor providing a rotational driving force for the screw member; a cutter member which is installed in the body part to pulverize the polymer; and a perforated plate having a plurality of holes formed therein, which discharges the polymer pulverized by the cutter member to the outside of the body part. In this regard, the size of holes provided in the perforated plate of the micronizer may be 1 mm to 10 mm, or 1 to 6mm.

Further, the micronization step may be performed in the presence of a surfactant.

The surfactant is adsorbed or bound onto the surface of the water-containing gel polymer to lower adhesiveness of the surface of the water-containing gel polymer, thereby controlling agglomeration between the pulverized water-containing gel polymers.

Traditionally, particles of several mm or several cm in size have been formed by a process of chopping the water-containing gel polymer. Although the surface area of the water-containing gel polymer may be rather increased by this chopping process, it was difficult to expect an effect enough to effectively improve the absorption rate. Accordingly, in order to improve the absorption rate, a method of increasing the surface area by kneading with an increased mechanical force in the chopping step has been proposed. In this case, excessive agglomeration occurred due to the unique stickiness of the polymer, and after chopping, drying and pulverization, amorphous single particles with uneven surface only were formed, and the water-soluble components were rather increased by excessive kneading or crushing.

Accordingly, in the present invention, since the micronization process for the water-containing gel polymer is performed in the presence of a surfactant, the surfactant is present in a large amount on the surface of the water-containing gel polymer. The surfactant present on the surface of the water-containing gel polymer lowers high adhesiveness of the polymer, thereby preventing excessive agglomeration of the polymer and controlling the agglomeration state at a desired level. As a result, unlike the traditional chopping process performed in a micrometer size, the water-containing gel polymer may be pulverized to a size of several millimeters to several hundred micrometers, and the subsequent pulverization and drying processes may be performed under milder conditions. Therefore, it is possible to remarkably reduce the amount of fine particles generated during the preparation process.

On the other hand, when the water-containing gel polymer is micronized in the presence of the surfactant, there is a possibility that the surfactant may not sufficiently perform its role because the surfactant penetrates into the interior of the water-containing gel polymer rather than exists at the interface of the water-containing gel polymer due to the high water content of the water-containing gel polymer. In contrast, the present invention solves this problem by using a micronizer having a characteristic structure as described above.

In addition, the hydrophobic functional moiety included in the surfactant provides hydrophobicity for the surface

of the pulverized superabsorbent polymer particles to relieve friction between particles, thereby increasing the apparent density of the superabsorbent polymer, and the hydrophilic functional moiety included in the surfactant is also bound to the superabsorbent polymer particles to prevent reduction of the surface tension of the superabsorbent polymer. As a result, the superabsorbent polymer prepared by the preparation method according to the present invention may exhibit a high apparent density while exhibiting the surface tension equivalent to that of the superabsorbent polymer without the surfactant.

Specifically, the surfactant may be a compound represented by the following Chemical Formula 2 or a salt thereof, but the present invention is not limited thereto:

[Chemical Formula 2]

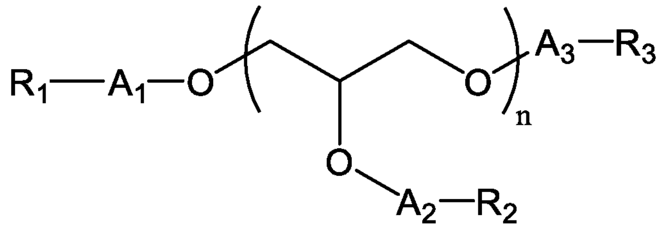

wherein, in Chemical Formula 2,

$A_1$, $A_2$ and $A_3$ are each independently a single bond, carbonyl,

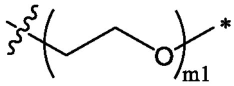,

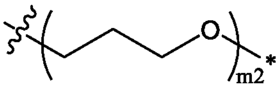 or 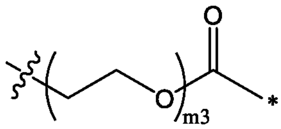,

provided that one or more thereof are carbonyl or

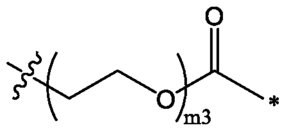,

wherein m 1, m2 and m3 are each independently an integer of 1 to 8,

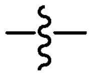

is linked to an adjacent oxygen atom, 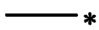 is linked to adjacent $R_1$, $R_2$, or $R_3$,

$R_1$, $R_2$ and $R_3$ are each independently hydrogen, a linear or branched alkyl having 6 to 18 carbon atoms, or a linear or branched alkenyl having 6 to 18 carbon atoms, and

n is an integer of 1 to 9.

The surfactant is mixed with the polymer, which is added such that the micronization step may be easily accomplished without agglomeration.

The surfactant represented by Chemical Formula 2 is a nonionic surfactant and has excellent surface adsorption

performance by hydrogen bonding force even with an unneutralized polymer, and therefore, it is suitable for realizing the desired agglomeration control effect. In contrast, when an anionic surfactant, not a nonionic surfactant, is mixed with a polymer neutralized with a neutralizing agent such as NaOH or $Na_2SO_4$, it is adsorbed via $Na^+$ ions ionized in carboxyl substituents of the polymer, and when mixed with the unneutralized polymer, there is a problem in that the adsorption efficiency for the polymer is relatively lowered due to competition with the anions of the carboxyl substituents of the polymer.

Specifically, in the surfactant represented by Chemical Formula 2, the hydrophobic functional group is the terminal functional groups, $R_1$, $R_2$, $R_3$ moieties (if not hydrogen), and the hydrophilic functional group includes a glycerol-derived moiety in the chain and a hydroxyl group at the terminal (when $A_n$ is a single bond, and at the same time, when $R_n$ is hydrogen, n=1 to 3), wherein the glycerol-derived moiety and the terminal hydroxyl group are hydrophilic functional groups and serve to improve adsorption performance on the polymer surface. Accordingly, agglomeration of the superabsorbent polymer particles may be effectively suppressed.

In Chemical Formula 2, the hydrophobic functional groups, $R_1$, $R_2$, $R_3$ moieties (if not hydrogen) are each independently a linear or branched alkyl having 6 to 18 carbon atoms, or a linear or branched alkenyl having 6 to 18 carbon atoms. In this regard, when $R_1$, $R_2$, and $R_3$ moieties (if not hydrogen) are alkyl or alkenyl having less than 6 carbon atoms, there is a problem in that agglomeration of the pulverized particles may not be effectively controlled because the chain length is short. When $R_1$, $R_2$, and $R_3$ moieties (if not hydrogen) are alkyl or alkenyl having more than 18 carbon atoms, there may be problems in that the surfactant may not be effectively mixed with the polymer because its mobility is reduced, and the unit price of the composition is increased due to the increased cost of the surfactant.

Preferably, when $R_1$, $R_2$, and $R_3$ may be hydrogen or a linear or branched alkyl having 6 to 18 carbon atoms, they may be 2-methylhexyl, n-heptyl, 2-methylheptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, or n-octadecanyl, or when $R_1$, $R_2$, and $R_3$ may be a linear or branched alkenyl having 6 to 18 carbon atoms, they may be 2-hexenyl, 2-heptenyl, 2-octenyl, 2-nonenyl, n-decenyl, 2-undecenyl, 2-dodecenyl, 2-tridecenyl, 2-tetradecenyl, 2-pentadecenyl, 2-hexadecenyl, 2-heptadecenyl, or 2-octadecenyl.

The surfactant may be selected from compounds represented by the following Chemical Formula 2-1 to Chemical Formula 2-14:

[Chemical Formula 2-1]

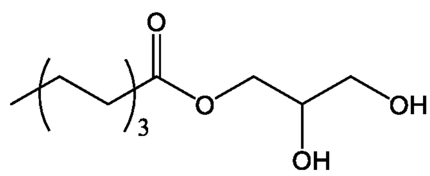

[Chemical Formula 2-2]

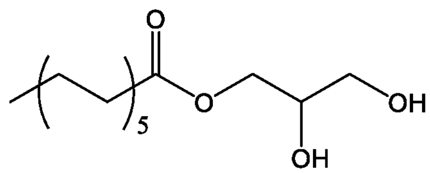

[Chemical Formula 2-3]

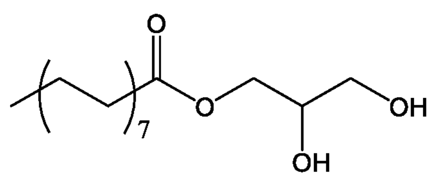

[Chemical Formula 2-4]

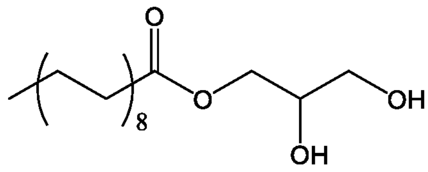

[Chemical Formula 2-5]

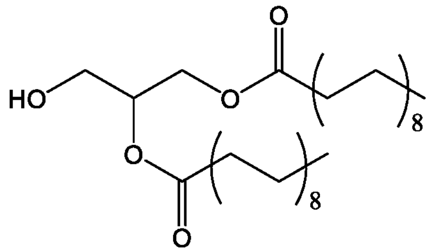

[Chemical Formula 2-6]

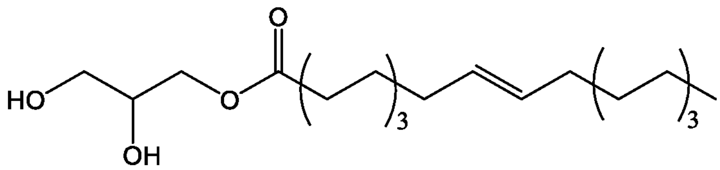

[Chemical Formula 2-7]

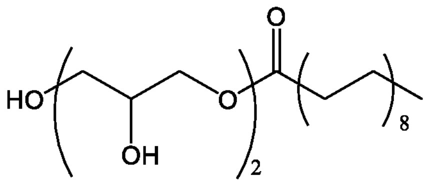

[Chemical Formula 2-8]

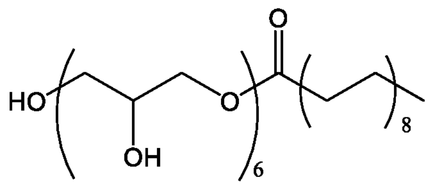

[Chemical Formula 2-9]

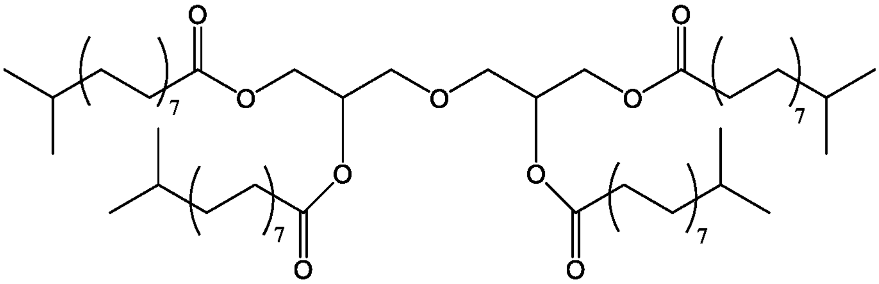

[Chemical Formula 2-10]

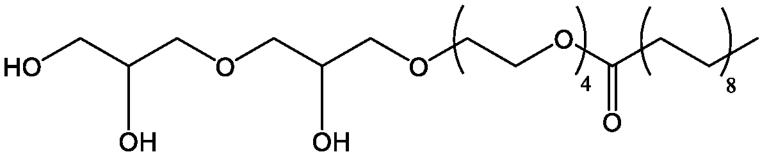

[Chemical Formula 2-11]

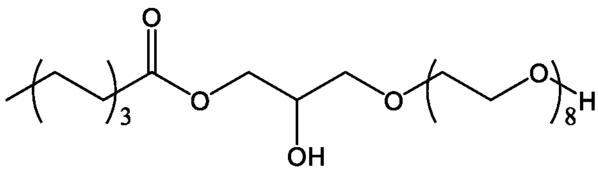

[Chemical Formula 2-12]

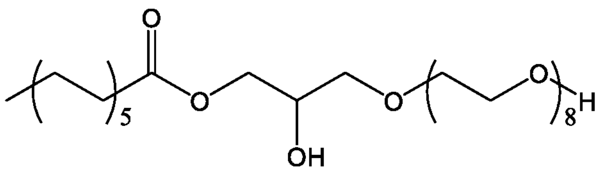

[Chemical Formula 2-13]

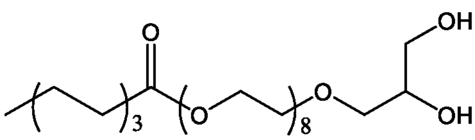

[Chemical Formula 2-14]

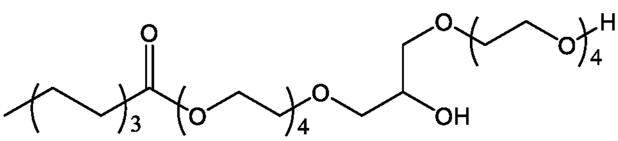

Meanwhile, the surfactant may be used in an amount of 0.01 part by weight to 10 parts by weight with respect

to 100 parts by weight of the water-containing gel polymer. When the surfactant is used in an excessively small amount, it is not uniformly adsorbed onto the polymer surface, and thus re-agglomeration of particles may occur after pulverization. When the surfactant is used in an excessively large amount, the overall physical properties of the superabsorbent polymer finally prepared may deteriorate. For example, the surfactant may be used in an amount of 0.01 part by weight or more, or 0.015 parts by weight or more, or 0.1 part by weight or more, and 5 parts by weight or less, or 3 parts by weight or less, or 2 parts by weight or less, or 1 part by weight or less, or 0.5 parts by weight or less with respect to 100 parts by weight of the water-containing gel polymer.

A method of mixing the surfactant with the polymer is not particularly limited as long as it is a method capable of evenly mixing the surfactant with the polymer, and may be appropriately adopted and used. Specifically, the surfactant may be mixed in a dry manner, or mixed in a solution state after being dissolved in a solvent, or the surfactant may be melted and then mixed.

Among them, for example, the surfactant may be mixed in a solution state after being dissolved in a solvent. In this regard, any kind of solvent may be used without any limitation on inorganic or organic solvents, but water is most appropriate in consideration of the ease of the drying process and the cost of the solvent recovery system. In addition, a method of mixing the solution with the surfactant and the polymer in a reaction tank, a method of placing the polymer in a mixer and then spraying the solution thereto, or a method of continuously supplying the polymer and the solution to a mixer which is continuously operated, and then mixing them with each other may be used.

Meanwhile, with regard to the preparation method of the present invention, in Method 2 of the step 1, the process of neutralizing at least part of the acidic groups of the polymer and the process of performing micronization of the polymer in the presence of the surfactant may be sequentially, or alternately, or simultaneously performed.

In other words, after neutralizing the acidic groups by adding a neutralizing agent to the polymer, the surfactant may be added to the neutralized polymer to perform micronization of the polymer which is mixed with the surfactant, or the polymer may be subjected to neutralization and micronization by simultaneously adding the neutralizing agent and the surfactant to the polymer. Alternatively, the surfactant may be first added, and then the neutralizing agent may be added. Alternatively, the neutralizing agent and the surfactant may be alternately added. Alternatively, the surfactant may be first added to perform micronization, and then the neutralizing agent may be added to perform neutralization, and the surfactant may be further added to the neutralized water-containing gel polymer to further perform the micronization process.

However, for even neutralization of the entire polymer, it may be preferable to have a predetermined time difference between the addition of the neutralizing agent and the micronization process.

Meanwhile, when the surfactant is added, at least part or a significant amount of the surfactant may be present on the surface of the water-containing gel polymer particles.

In this regard, the presence of the surfactant on the surface of the water-containing gel polymer particles means that at least part or a significant amount of the surfactant is adsorbed or bound onto the surface of the water-containing gel polymer particles. Specifically, the surfactant may be physically or chemically adsorbed onto the surface of the water-containing gel polymer particles. More specifically, the hydrophilic functional group of the surfactant may be physically adsorbed onto the hydrophilic moiety of the surface of the water-containing gel polymer particles by intermolecular forces such as dipole-dipole interaction. As described, the hydrophilic moiety of the surfactant is physically adsorbed onto the surface of the water-containing gel polymer particles to cover the surface, and the hydrophobic moiety of the surfactant is not adsorbed onto the surface of the polymer particles, and thus the water-containing gel polymer particles may be coated with the surfactant in a kind of micelle structure. This is because the surfactant is not added during the polymerization process of the water-soluble ethylenically unsaturated monomer, but is added in the micronization step after the polymer is formed. The surfactant may fully perform its role, and pulverization and agglomeration occur at the same time to obtain particles with a large surface area by agglomeration of fine particles, as compared to the case where the surfactant is added during the polymerization process and the surfactant is present inside the polymer.

As described, by performing micronization of the polymer after mixing the polymer and the surfactant or in the presence of the surfactant, the water-containing gel polymer particles in the form of secondary agglomerated particles may be prepared, in which the superabsorbent polymer particles and the surfactant in a mixed state are shredded and agglomerated.

As used herein, the "water-containing superabsorbent polymer particles" refer to particles having a water content of about 30% by weight or more, and since the water-containing superabsorbent polymer particles are obtained in the form of particles by shredding and agglomeration of the water-containing gel polymer without a drying process, they have a water content of 30% by weight to 80% by weight, like the water-containing gel polymer. More specifically, the water content may be 30% by weight or more, or 35% by weight or more, or 40% by weight or more, and 80% by weight or less, or 75% by weight or less, or 70% by weight or less.

Further, in the preparation method according to the present invention, during the micronization step, one or more additives of metal hydroxides and metal salts may be optionally further added, in addition to the surfactant.

The metal hydroxides act to impart absorption capacity by forming an osmotic pressure during the micronization

process. Specific examples may include hydroxides of alkali metals such as sodium hydroxide, potassium hydroxide, etc., and any one thereof or a mixture of two or more thereof may be used.

In addition, the metal salts serve to remove residual monomers during the micronization process. Specific examples include sulfates of alkali metals such as sodium sulfite, sodium persulfate, potassium persulfate, etc.; or ammonium sulfate-based compounds such as ammonium persulfate, etc., and any one thereof or a mixture of two or more thereof may be used.

The additives may be used in an amount of 0.01 part by weight to 20 parts by weight with respect to 100 parts by weight of the water-containing gel polymer. When the additives are used in an excessively small amount, the effect of using the additive is insignificant, and when the additives are used in an excessively large amount, overall physical properties of the superabsorbent polymer finally prepared may deteriorate. More specifically, the additives may be used in an amount of 0.01 part by weight or more, 0.05 parts by weight or more, or 0.1 part by weight or more, and 20 parts by weight or less, or 15 parts by weight or less, or 13 parts by weight or less, or 10 parts by weight or less, or 6 parts by weight or less with respect to 100 parts by weight of the water-containing gel polymer.

As in the method of introducing the surfactant, the additives may be mixed with the polymer in a dry manner, or mixed in a solution state after being dissolving in a solvent, or mixed in a state where the additives are dispersed in a dispersion medium, or mixed with the polymer after being melted.

In addition, when the micronization step is performed twice or more, the additives may be introduced in the same or different manner according to each micronization step. For example, when the micronization step is performed four times, the micronization step may be performed by a first micronization step of performing primary micronization of the water-containing gel polymer using the micronizer under conditions without the surfactant and additives; a second micronization step of performing secondary micronization of the primary micronized water-containing gel polymer using the micronizer under conditions with the metal hydroxide; a third micronization step of performing tertiary micronization of the secondary micronized water-containing gel polymer using the micronizer under conditions with the metal salt; and a fourth micronization step of performing quaternary micronization of the tertiary micronized water-containing gel polymer using the micronizer under conditions with the surfactant. The feeing amounts of the surfactant and additive in each step are the same as described above, and the order of the first to fourth micronization steps may be changed.

When the micronization step is performed in the same manner as above, it is possible to realize a particle size distribution at the same level as that of a product after drying, and thus generation of fine particles may be further reduced.

Accordingly, the preparation method according to the present invention may not include an additional pulverization step after the micronization process. In addition, since the content of fine particles in the water-containing superabsorbent polymer particles obtained after the micronization process is low, an additional classification step may not be included. That is, it is possible to prepare a superabsorbent polymer having a particle size applicable to products even without additional pulverization and classification steps. However, depending on the application of the products and need, the micronization may be additionally performed or a classification process may be additionally performed.

## Step 3

Next, the step 3 is a step of preparing dry superabsorbent polymer particles by drying the water-containing superabsorbent polymer particles.

In the common method for preparing a superabsorbent polymer, the drying step is generally performed until the water content of the superabsorbent polymer is less than 10 % by weight. However, in the preparation method according to the present invention, the drying process may be performed such that the water content of the superabsorbent polymer after drying is 10% by weight or more, more specifically 10% by weight to 20% by weight, or 10% by weight to 15 % by weight, based on a total weight of the dry superabsorbent polymer particles.

To this end, the drying may be performed at 80°C to 250°C for 5 minutes to 80 minutes. When the drying temperature is too low, the drying time may be prolonged and processability may be deteriorated, and when the drying temperature is excessively high, the water content of the superabsorbent polymer particles may be too low, leading to cracking during the subsequent process. More specifically, the drying may be performed at a temperature of 80°C or higher, or 100°C or higher, or 120°C or higher, and 250°C or lower, or 180°C or lower, or 150°C or lower for 5 minutes or longer, or 20 minutes or longer, and 80 minutes or shorter or 60 minutes or shorter.

Further, the drying may be performed in a moving type. Such a moving type drying is distinguished from a fixed-bed type drying according to whether materials flow or not during drying.

The moving-type drying refers to a method of drying a product under mechanical stirring. At this time, the direction in which the hot air passes through the material may be the same as or different from the circulation direction of the material. Alternatively, the material may be dried by circulating the material inside the dryer, and passing a heating medium fluid (heating medium oil) through a separate pipe outside the dryer. In contrast, the fixed-bed type drying refers to a method in which a material to be dried is fixed on a floor such as a perforated iron plate through which air can pass, and is dried by passing hot air through the material from the bottom to top.

Therefore, in the drying step, it is preferable to perform drying in the moving type drying in terms of preventing aggregation between the water-containing superabsorbent polymer particles to be dried and completing drying within a short time.

As a device capable of drying by such a moving type drying, a moving type dryer commonly used, such as a horizontal-type mixer dryer, a rotary kiln, a paddle dryer, or a steam tube dryer, etc. may be used.

Further, as the moving type drying method is used, the rotation speed may be controlled, thereby further improving the drying efficiency. For example, the rotation speed may be 10 rpm or more, or 30 rpm or more, or 50 rpm or more, or 80 rpm or more, and 200 rpm or less, or 150 rpm or less, or 120 rpm or less, or 100 rpm or less. Within the above range, the rotation speed may be preferably determined by considering the water content of the water-containing gel polymer, the amount of the water-containing gel polymer, the kind of the moving type dryer, the drying conditions such as the drying temperature, the drying time, etc.

Through the above-described drying process, dry superabsorbent polymer particles having a higher water content than those traditionally prepared may be obtained. Specifically, the water content of the dry superabsorbent polymer particles may be 10% by weight or more, more specifically, 10% by weight to 20% by weight, or 10% by weight to 15% by weight. As the dry superabsorbent polymer particles have the above range of the water content, generation of fine particles may be prevented or minimized during subsequent processes.

## Step 4

Next, the step 4 is a step of performing a surface crosslinking reaction by adding a surface crosslinking agent to the dry superabsorbent polymer particles.

By the above step, the crosslinked polymer included in the dry superabsorbent polymer particles is further crosslinked via the surface crosslinking agent, and thus the surface crosslinking layer may be formed on at least part of the surface of the dry superabsorbent polymer particles.

As the surface crosslinking agent, any surface crosslinking agent that has been traditionally used for the preparation of superabsorbent polymers may be used without any particular limitation. For example, the surface crosslinking agent may include one or more polyols selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; one or more carbonate-based compounds selected from the group consisting of ethylene carbonate, propylene carbonate, and glycerol carbonate; an epoxy compound such as ethylene glycol diglycidyl ether, etc.; an oxazoline compound such as oxazolidinone, etc.; a polyamine compound; an oxazoline compound; a mono-, di- or poly-oxazolidinone compound; a cyclic urea compound; etc.

Specifically, as the surface crosslinking agent, one or more, or two or more, or three or more of the above-described surface crosslinking agents may be used. For example, ethylene glycol diglycidyl ether, and propylene glycol may be used in a mixture.

Such a surface crosslinking agent may be used in an amount of 0.001 part by weight to 5 parts by weight with respect to 100 parts by weight of the dry superabsorbent polymer particles. More specifically, the surface crosslinking agent may be used in an amount of 0.001 part by weight or more, or 0.01 part by weight or more, or 0.1 part by weight or more, or 0.3 parts by weight or more, or 0.4 parts by weight or more, and 5 parts by weight or less, or 3 parts by weight or less, or 1 part by weight or less with respect to 100 parts by weight of the dry superabsorbent polymer particles. By controlling the content of the surface crosslinking agent at the above-mentioned range, a superabsorbent polymer exhibiting excellent absorption properties may be prepared.

In addition, the step of forming the surface-crosslinked layer may be performed by adding an inorganic material to the surface crosslinking agent. That is, in the presence of the surface crosslinking agent and the inorganic material, the step of forming the surface-crosslinked layer by further crosslinking the surface of the superabsorbent polymer particles may be performed.

As the inorganic material, one or more inorganic materials selected from the group consisting of silica, clay, alumina, silica-alumina composite, titania, zinc oxide, and aluminum sulfate may be used. The inorganic material may be used in the form of powder or liquid, and particularly, in the form of alumina powder, silica-alumina powder, titania powder, or a nanosilica solution.

The inorganic material may be used in an amount of 0.001 part by weight to 1 part by weight, more specifically, 0.001 part by weight or more, or 0.01 part by weight or more, or 0.1 part by weight or more, and 1 part by weight or less, or 0.5 parts by weight or less with respect to 100 parts by weight of the dry superabsorbent polymer particles.

Further, a method of mixing the surface crosslinking agent with the superabsorbent polymer particles is not limited in view of its construction. For example, a method of feeding the surface crosslinking agent and the superabsorbent polymer particles to a reactor and mixing them with each other, a method of spraying the surface crosslinking agent onto the superabsorbent polymer particles, or a method of mixing the superabsorbent polymer particles and the surface

crosslinking agent while continuously feeding them to a mixer which is continuously operated may be used.

When the surface crosslinking agent and the superabsorbent polymer particles are mixed, water and methanol may be mixed together and added. When water and methanol are added, there is an advantage in that the surface crosslinking agent may be uniformly dispersed in the superabsorbent polymer particles. Here, the amounts of water and methanol to be added may be appropriately controlled so as to induce uniform dispersion of the surface crosslinking agent, to prevent agglomeration of the superabsorbent polymer particles, and to optimize the surface penetration depth of the crosslinking agent at the same time.

The surface crosslinking process may be performed at a temperature of 80°C to 250°C. More specifically, the surface crosslinking process may be performed at a temperature of 100°C to 220°C, or 120°C to 200°C for about 20 minutes to about 2 hours, or about 40 minutes to about 80 minutes. When satisfying the above-described conditions of the surface crosslinking process, the surface of the superabsorbent polymer particles may be sufficiently crosslinked to increase absorbency under pressure.

A means for raising temperature for the surface crosslinking reaction is not particularly limited. Heating may be performed by providing a heating medium or by directly providing a heat source. In this regard, the kind of the applicable heating medium may be a hot fluid, etc., such as steam, hot air, or hot oil, but is not limited thereto. The temperature of the heating medium to be provided may be properly controlled, taking into consideration the means of the heating medium, the heating rate, and the target temperature. Meanwhile, as the heat source to be directly provided, an electric heater or a gas heater may be used, but is not limited to the above-described examples.

## Step 5

Next, the step 5 is a step of simultaneously cooling and hydrating the superabsorbent polymer particles, on which the surface-crosslinked layer is formed as a result of the step 4, using a spade-type cooler.

Traditionally, a paddle-type cooler has been mainly used for cooling the superabsorbent polymer after the surface crosslinking reaction. The paddle-type cooler is provided with one or more rotational shafts inside the cooler in the longitudinal direction of the cooler, and a plurality of paddles or paddle-type blades are installed on the rotational shaft such that the superabsorbent polymer particles inside the cooler are cooled by agitating and mixing with cooling water while rotating the paddles according to the rotation of the rotational shaft. However, in the paddle-type cooler, agitation and mixing are performed by the paddles which rotate along the rotational shaft inside the cooler, and thus the agitation and mixing of the superabsorbent polymer particles and the cooling water occur only within the rotational radius of the paddles. As a result, it is difficult to sufficiently and uniformly bring the superabsorbent polymer particles into contact with cooling water and hydrating throughout the superabsorbent polymer particles. In addition, during agitation and mixing, agglomeration between the superabsorbent polymer particles easily occurs, and as a result, the content of coarse particles having a particle diameter of more than 850 μm in the resultant superabsorbent polymer is high, and there are large deterioration and deviation in the physical properties of the superabsorbent polymer.

For this reason, in the present invention, the spade-type cooler is used, whereby uniform cooling and hydrating are possible throughout the superabsorbent polymer particles, on which the surface-crosslinked layer is formed, and furthermore, uniform mixing with additives additionally added is possible.

The spade-type cooler includes a rotatable body part and one or more spade-type blades which are installed on an inner wall of the body part to be operable up and down. Accordingly, when the superabsorbent polymer particles having the surface-crosslinked layer formed thereon are introduced into the body part for cooling and hydrating, the body part rotates, and the spade-type blades rotate along with the rotation of the body part and operate up and down. The superabsorbent polymer particles in the body part are scooped up by the up-and-down operation of the spade-type blades, and then fall in the direction of gravity according to the rotation of the body part. At this time, the superabsorbent polymer particles falling in the direction of gravity are brought into contact with the cooling air and water which are injected into the body part, and thus cooling and hydrating occur. Accordingly, uniform cooling and hydrating are possible throughout the particles. In addition, when additives for improving the physical properties of the superabsorbent polymer particles are selectively further added, uniform mixing with the additives is also possible.

Further, unlike in the traditional paddle-type cooler, in the spade-type cooler, the superabsorbent polymer particles are agitated with and brought into contact with cooling air, water, and additives while flowing up and down inside the body part without being stuck, and thus it is possible to reduce the contact and friction between the spade-type blade and the superabsorbent polymer particles and between the superabsorbent polymer particles, and as a result, it is possible to prevent the breakage of the superabsorbent polymer particles and consequent deterioration of the physical properties.

Further, in the spade-type cooler, a part of the spade-type blade, for example, the center or edge thereof has a concave shape, such as a spoon or shovel. Therefore, as compared to the paddle with the flat edge, the spade-type blade is advantageous in scooping up the superabsorbent polymer particles, and as a result, the contacting of the superabsorbent polymer particles with cooling air and water is more uniformly made throughout the superabsorbent

polymer particles.

Further, the spade-type cooler is able to easily separate the agglomerated particles by the agitation force generated in multiple directions inside the body part, even though agglomeration occurs between the superabsorbent polymer particles during the cooling and hydrating. As a result, it is possible to reduce the content of coarse particles in the superabsorbent polymer particles, and to prevent and minimize deviations in the physical properties and absorption performances of superabsorbent polymer.

FIGS. 1 to 3 show schematic illustrations of the side cross-sectional structure, the front structure, and the rear structure of the spade-type cooler used in the method for preparing a superabsorbent polymer according to the present invention, respectively. FIGS. 1 to 3 are only for illustrating the present invention, and the present invention is not limited thereto.

Hereinafter, referring to FIGS. 1 to 3, the spade-type cooler 10 specifically includes a rotatable body part 1 including a transfer space, through which the superabsorbent polymer particles having the surface-crosslinked layer formed thereon are transferred; two nozzles which are installed in the body part 1, each injecting cooling air and water into the transfer space, i.e., a cooling air input nozzle 2a and a water input nozzle 2b; one or more spade-type blades 3 which are installed on an inner wall of the body part to be operable up and down and to scoop up the superabsorbent polymer particles having the surface-crosslinked layer formed thereon in the transfer space; and a driving motor 4 which is connected to the body part 1 to provide a driving force, wherein the superabsorbent polymer particles having the surface-crosslinked layer formed thereon are scooped up by up and down operation of the spade-type blades 3 in the body part 1, and then the superabsorbent polymer particles scooped up are dropped by the rotation of the body part 1 in the direction of gravity, and brought into contact with cooling air and water injected into the transfer space of the body part 1, and as a result, the cooling and hydrating of the superabsorbent polymer particles having the surface-crosslinked layer formed thereon are simultaneously performed.

Specifically, the body part 1 in the spade-type cooler includes the transfer space through which superabsorbent polymer particles having the surface-crosslinked layer formed thereon are transported and flowed.

The shape of the body part 1 is not particularly limited, but the shape may be, for example, a cylindrical or drum type.

In addition, the body part 1 is rotatable, and accordingly, components existing in the internal space of the body part may be agitated and mixed by rotation of the body part.

The rotation of the body part 1 may be made by the whole body part, or by rotation in a certain part of the body part. For example, the whole body part may be rotated by a driving force transmitted from the driving motor 4. For another example, rotational shafts are respectively provided in the longitudinal direction of the body part on the outer upper and lower parts of the body part 1, and when the driving force is transmitted from the driving motor to the rotational shafts, the rotational shafts rotate by the driving force, and as a result, the body part is able to rotate in the direction perpendicular to the longitudinal direction of the body part.

In addition, when only a certain part of the body part rotates, the body part may be connected to the driving motor and may include a rotating part that rotates by the driving force transmitted from the driving motor and a fixed part that does not rotate. For example, the rotating part may be placed on the upper side of the body part, into which the surface-crosslinked superabsorbent polymer particles and a cooling medium are introduced, and the fixed part may be placed on the lower side of the body part, from which the cooled superabsorbent polymer particles are discharged. Alternatively, the fixed part may be placed on the upper side of the body part, into which the surface-crosslinked superabsorbent polymer particles and a cooling medium are introduced, and the rotating part may be placed on the lower side of the body part, from which the cooled superabsorbent polymer particles are discharged. Alternatively, as shown in FIG. 1, the rotating part 1a may be placed at the middle of the body part, and the fixed part 1b may be placed at the upper side and the lower side of the rotating part 1a, respectively.

In addition, the body part 1 is provided with a superabsorbent polymer inlet for introducing the superabsorbent polymer particles having the surface-crosslinked layer formed thereon, and a superabsorbent polymer outlet for discharging the cooled and hydrated superabsorbent polymer particles, respectively. The position thereof is not particularly limited, and the superabsorbent polymer inlet may be provided at one end of the body part, and the superabsorbent polymer inlet may be provided at the other end of the body part. For example, as shown in FIG. 1, the superabsorbent polymer inlet 1c may be placed in the upper section of the body part 1, and the superabsorbent polymer outlet 1d may be placed in the lower section of the body part 1 such that the superabsorbent polymer inside the body part 1 is allowed to flow in one direction.

In addition, as in FIG. 1, in the spade-type cooler, a discharge plate may be further provided on the inner wall of the body part, in which the discharge plate is inclined toward the outlet 1d and is connected to the outlet so as to facilitate discharging of the cooled and hydrated superabsorbent polymer particles. In this case, when the cooled and hydrated superabsorbent polymer particles are accumulated on the discharge plate, they may be easily discharged to the outlet due to the inclination of the discharge plate.

For another example, the body part 1 consists of an upper section where the superabsorbent polymer inlet 1c

for introducing the superabsorbent polymer is placed, a jacket section where cooling is made by mixing and contacting the superabsorbent polymer particles with cooling air and water, and a lower section where the superabsorbent polymer outlet 1d for discharging the cooled superabsorbent polymer particles is placed. In this case, the jacket section corresponds to the rotating part 1a, and the upper and lower sections correspond to the fixed part 1b.

In addition, the body part 1 is provided with respective nozzles for introducing the cooling air and water, i.e., a cooling air input nozzle 2a and a water input nozzle 2b. Accordingly, cooling air and water introduced through the nozzles are sprayed into the space of the body part. The nozzle may be optionally provided with a nozzle opening/closing means or control means, such as a valve or a switch capable of controlling the feeding speed or spraying speed of cooling air and water, and the feeding amount or spraying amount.

The positions where the nozzles are placed are not particularly limited. For example, in consideration of easy mixing and uniformity with the superabsorbent polymer, the nozzles may be placed on the superabsorbent polymer inlet side, i.e., at the upper section of the body part where the inlet is placed, more specifically, at the fixed part 1b placed on the upper side of the body part.

In addition, the spade-type blades 3 are installed on the inner wall of the body part 1 to be operable up and down.

The spade-type blades 3 have a spoon or shovel shape, and operate up and down while rotating together with the rotation of the body part. As a result, the superabsorbent polymer particles existing in the transfer space of the body part are scooped up from the bottom, and the superabsorbent polymer particles scooped up by the spade-type blades fall by the rotation of the body part and gravity, and are brought into contact with the cooling air and water fed into the inner space of the body part, and thus mixed with each other.

One or more, or two or more, or three or more, or four or more of the spade-type blade 3 may be provided on the inner wall of the body part, but are not limited thereto. It may be appropriately determined in consideration of the size of the body part, etc.

In addition, since the spade-type blades operate up and down while rotating according to the rotation of the body part, the operating speed of the spade-type blades is determined according to the rotation speed of the body part. However, a separate operating speed control member may be optionally further included for controlling the operating speed of the spade-type blades.

In addition, the spade-type cooler 10 includes a driving motor 4 which is connected to the body part 1 to provide a driving force, specifically, a rotational driving force.

In addition, the spade-type cooler 10 is a superabsorbent polymer supply unit (not shown) for storing and supplying the superabsorbent polymer particles having the surface-crosslinked layer formed thereon; a cooling air supply unit (not shown) that stores cooling air and supplies the cooling air through the cooling air input nozzle which is installed in the body part of the cooler; a water supply unit (not shown) that stores water and supplies water through the water input nozzle which is installed in the body part of the cooler; optionally, one or more of an additive nozzle (not shown) and an additive inlet 1e, which are installed in the body part of the cooler for selectively adding an additive during the cooling and hydrating process.

FIG. 4 shows a schematic illustration of a mixing process that occurs in the body part of the spade-type cooler during the cooling and hydrating step in the method for preparing a superabsorbent polymer according to the present invention. In FIG. 4, arrow marks indicate rotation of the body part.

Referring to FIG. 4, when the surface-crosslinked superabsorbent polymer particles 20 are introduced through the superabsorbent polymer inlet in the spade-type cooler having the above structure, the superabsorbent polymer particles are scooped up by the up-and-down operation of the spade-type blades 3 in the body part of the cooler. Thereafter, the superabsorbent polymer particles thus scooped up fall in the direction of gravity due to the rotation of the body part and are brought into contact with cooling air and water which are injected into the space of the body part by a method such as spraying through the nozzles connected to the body part. At this time, the superabsorbent polymer particles are cooled by heat exchange with cooling air and water, and at the same time, the superabsorbent polymer particles are hydrated by the water. In particular, in the spade-type cooler according to the present invention, the superabsorbent polymer particles in the body part fall uniformly by gravity, and thus the contacting and hydrating may be made uniformly throughout the superabsorbent polymer particles, which may prevent and minimize deviations in physical properties and absorption performances of the superabsorbent polymer.

Meanwhile, the temperature of cooling air introduced into the spade-type cooler may be 10°C to 60°C, and cooling air may be introduced through the cooling air input nozzle installed in the body part at a speed of 0.01 $m^3$/h/kg to 0.25 $m^3$/h/kg, based on 1 kg of the feeding amount of the superabsorbent polymer having the surface-crosslinked layer formed thereon. When cooling air is introduced under the above conditions, an excellent cooling effect may be obtained. More specifically, the temperature of cooling air may be 10°C or higher, or 15°C or higher, or 20°C or higher, or 25°C or higher, or 30°C higher, and 60°C or lower, or 50°C or lower, or 40°C or lower, or 35°C or lower, and cooling air may be introduced through the cooling air input nozzle installed in the body part at a speed of 0.01 $m^3$/h/kg or more, or 0.05 $m^3$/h/kg or more, or 0.1 $m^3$/h/kg or more, and 0.25 $m^3$/h/kg or less, or 0.2 $m^3$/h/kg or less, or 0.15 $m^3$/h/kg or less, based on 1 kg of the feeding amount of the superabsorbent polymer.

Further, the temperature of water may be 10°C to 60°C, and water may be introduced in an amount of 2 parts by weight to 20 parts by weight, based on 100 parts by weight of the superabsorbent polymer particles having the surface-crosslinked layer formed thereon. When water is introduced under the above conditions, the cooling and hydrating effects may be exhibited on the superabsorbent polymer particles having the surface-crosslinked layer formed thereon. More specifically, the temperature of water may be 10°C or higher, or 15°C or higher, or 20°C or higher, or 23°C or higher, and 60°C or lower, or 50°C or lower, or 40°C or lower, or 30°C or lower, or 27°C or lower, and more specifically, room temperature (25±2°C). Further, water may be introduced in an amount of 2 parts by weight or more, or 5 parts by weight or more, and 20 parts by weight or less, or 10 parts by weight or less, based on 100 parts by weight of the superabsorbent polymer particles having the surface-crosslinked layer formed thereon.

In addition, in the spade-type cooler, the body part 1 or the rotating part 1a in the body part may be rotated at a speed of 5 revolutions to 50 revolutions per minute (or 5 rpm to 50 rpm). On the other hand, one rotation of the body part or the rotating part in the body part per minute corresponds to 1 rpm.

When rotating under the above conditions, the superabsorbent polymer particles may fall at a speed sufficient to contact with the cooling air and water. More specifically, the body part or the rotating part in the body part may rotate at a speed of 5 revolutions or more, or 10 revolutions or more, or 20 revolutions or more, and 50 revolutions or less, or 40 revolutions or less, or 30 revolutions or less per minute. Meanwhile, in the present invention, the spade-type cooler may be optionally further provided with a rotation speed control device (not shown), such as an inverter, which is located between the body part and the driving motor to control the rotation speed of the body part or the rotating part in the body part.

In addition, in the preparation method according to the present invention, one or more additives for improving cooling efficiency during the cooling process and for improving the water content and physical properties of the superabsorbent polymer may be added.

Specifically, the additive may be an inorganic material. Specific examples thereof may include silica, clay, alumina, silica-alumina composites, titania, zinc oxide, aluminum sulfate, etc., and any one or a mixture of two or more thereof may be used. The inorganic materials may act as an anti-caking agent to increase the water content of the superabsorbent polymer particles and to improve the anti-caking efficiency.

When the inorganic material is further added, it may be introduced through an additive nozzle (not shown) or an additive inlet (1e), which is installed in the body part of the spade-type cooler to introduce the additives into the transfer space of the body part. Alternatively, the inorganic material may be mixed with the superabsorbent polymer having the surface-crosslinked layer formed thereon, and the mixture thereof may be introduced through the superabsorbent polymer inlet.

In the traditional method for preparing a superabsorbent polymer, the inorganic material is mixed using a blade-type mixer in order to improve the water content. In this case, since the inorganic material is dry-mixed, it was difficult to homogeneously mix, which generates deviations in the physical properties of the prepared superabsorbent polymer.

In contrast, in the present invention, wet-mixing is performed by introducing the inorganic material during the cooling and hydrating process using the spade-type cooler, and as a result, homogeneous mixing with the superabsorbent polymer is possible, and physical properties of the superabsorbent polymer to be prepared may be uniformly improved.

The inorganic material may be introduced in an amount of 0.02 parts by weight to 1.0 part by weight, based on 100 parts by weight of the superabsorbent polymer particles having the surface-crosslinked layer formed thereon. When the feeding amount of the inorganic material is too small, it is difficult to sufficiently obtain the effect of adding the inorganic material, whereas when the feeding amount of the inorganic material is too high, the water content of the superabsorbent polymer may be excessively increased, which may actually decrease the absorption performances. More specifically, the inorganic material may be introduced in an amount of 0.02 parts by weight or more, or 0.05 parts by weight or more, or 0.1 part by weight or more, and 1.0 part by weight or less, or 0.7 parts by weight or less, or 0.5 parts by weight or less, based on 100 parts by weight of the superabsorbent polymer particles having the surface-crosslinked layer formed thereon.

In addition to the above materials, additives such as a liquid permeability improver and a fluidity improver may be optionally added as additives, but the present invention is not limited thereto.

The method of introducing the additive is not particularly limited, and it may be introduced through the additive nozzle which is installed in the body part to introduce the additive into the space of the body part, or may be introduced after being mixed with the superabsorbent polymer.

By performing the above cooling and hydrating step, the water content of the superabsorbent polymer finally prepared is improved, the content of coarse particles is reduced, and as a result, a superabsorbent polymer article with higher quality may be manufactured.

Specifically, after the cooling and hydrating step, the content of coarse particles having a particle diameter of more than 850 μm in the cooled and hydrated superabsorbent polymer particles is 3% by weight or less, or 1% by weight or less, or 0.7% by weight or less, or 0.5% by weight or less, or 0.3% by weight. As the content of coarse particles is lower, it is better, and thus the lower limit is not particularly limited, but may be, for example, 0.01% by weight or more, or 0.1% by weight or more.

On the other hand, the content (% by weight) of the coarse particles having a particle diameter of more than 850 μm is determined as follows: the cooled and hydrated superabsorbent polymer particles are classified using a standard molecular sieve according to ASTM standards to separate coarse particles having a particle diameter of more than 850 μm, and the weight thereof is measured, and a weight ratio of the coarse particles to a total weight of the cooled and hydrated superabsorbent polymer particles is calculated and expressed as a percentage. A detailed measurement method is as described in Experimental Example below.

**Additional step**

The preparation method according to the present invention may further include the step of classifying the cooled and hydrated superabsorbent polymer, after the cooling and hydrating step.

The classification process may be performed according to a common method of using a standard molecular sieve according to ASTM standards, and coarse particles having a particle diameter of more than 850 μm are separated and removed through this classification process, and the normal superabsorbent polymer particles having a particle diameter of 150 μm to 850 μm may be obtained.

In addition, the preparation method according to the present invention may further include the step of pulverizing the separated coarse particles and mixing the pulverized coarse particles with the normal superabsorbent polymer particles separated in the classification step, after the classification step.

The pulverization of the coarse particles may be performed using a common pulverization method, except that the coarse particles are pulverized to have a normal particle size.

Specifically, the pulverization may be performed using a pulverizer such as a vertical pulverizer, a turbo cutter, a turbo grinder, a rotary cutter mill, a cutter mill, a disc mill, a shred crusher, a crusher, a chopper, a disc cutter, etc., but the pulverizer is not limited to the above-described examples.

Alternatively, as the pulverizer, a pin mill, a hammer mill, a screw mill, a roll mill, a disc mill, a jog mill, etc. may be used, but the pulverizer is not limited to the above-described examples.

Thereafter, the mixing of the pulverized coarse particles and the normal superabsorbent polymer particles may be performed by a common mixing method, and the mixing ratio may also be appropriately determined in the range that does not deteriorate the absorption performances of the superabsorbent polymer.

According to the present invention, provided is a superabsorbent polymer prepared by the above preparation method.

The superabsorbent polymer prepared by the above preparation method has a high water content, and a low content of coarse particles having a particle diameter of more than 850 μm even without a separate classification process. As a result, the amount of fine particles generated when manufacturing a product using the superabsorbent polymer is small.

In addition, the superabsorbent polymer has a water retention capacity (CRC) and absorbency under pressure (AUP), which are general absorption properties, equivalent to or higher than those of a superabsorbent polymer prepared by the traditional method.

In addition, the superabsorbent polymer may have a uniform particle size and a narrow particle size distribution, and a low content of water-soluble components (EC), thereby exhibiting excellent liquid permeability, rewetting property, absorption rate, etc.

Specifically, the superabsorbent polymer includes a polymer in which a water-soluble ethylenically unsaturated monomer having acidic groups and an internal crosslinking agent are crosslinking-polymerized, wherein at least part of the acidic groups of the polymer are neutralized, and the polymer may be further crosslinked through a surface crosslinking agent to include a surface-crosslinked layer formed on the polymer, and satisfies the following conditions of (i) to (iii):

(i) a water content: 1.2 % by weight to 5% by weight, based on a total weight of the superabsorbent polymer
(ii) a centrifuge retention capacity (CRC) measured according to EDANA WSP 241.3: 30 g/g to 45 g/g
(iii) a mean absorbency under a pressure of 0.3 psi measured according to EDANA WSP 242.3: 29 g/g to 40 g/g, a standard deviation of the absorbency under a pressure of 0.3 psi: 1 or less.

More specifically, the superabsorbent polymer has a water content of 1.2% by weight or more, or 1.4% by weight or more, or 1.5% by weight or more, or 1.7% by weight or more, or 1.8% by weight or more, or 1.9% by weight or more, and 5% by weight or less, or 3% by weight or less, or 2.6% by weight or less, or 2.5% by weight or less, or 2% by weight or less with respect to a total weight of the superabsorbent polymer. As described, since the superabsorbent polymer has the high water content, as compared to those of the prior art, surface damage due to friction between superabsorbent polymer particles during the preparation process is reduced, and therefore, deterioration of the physical properties of the superabsorbent polymer may be prevented. In addition, the amount of fine particles generated during a commercialization process using the superabsorbent polymer is reduced, thereby improving process stability and

productivity, and product quality.

The water content is the amount of water occupied with respect to a total weight of the superabsorbent polymer, and determined by measuring the weight loss due to evaporation of moisture in the superabsorbent polymer during the process of drying by raising the temperature of the superabsorbent polymer through infrared heating, and then calculating according to the following Equation 1. Detailed measurement method and conditions will be described in detail in Experimental Example below.

[Equation 1]

$$\text{Water content (\% by weight)} = [(Ao-At) / Ao] \times 100$$

In the equation, At represents the weight of the superabsorbent polymer after drying, measured after performing the drying process as follows: the temperature is increased from room temperature to 180°C and then the temperature is maintained at 180°C, and the total drying time is set to 40 minutes, including 5 minutes for the temperature rising step. Ao represents the weight of the superabsorbent polymer before drying.

More specifically, with regard to the superabsorbent polymer, a centrifuge retention capacity (CRC) for a physiological saline solution (0.9 wt% aqueous sodium chloride solution) for 30 minutes is 30 g/g or more, or 35 g/g or more, or 36.5 g/g or more, or 37 g/g or more, as measured according to EDANA WSP 241.3. As the CRC value is higher, it is better, and there is no practical limitation on the upper limit, but it may be, for example, 45 g/g or less, or 40 g/g or less. Detailed measurement method and conditions for CRC will be described in detail in Experimental Example below.

More specifically, with regard to the superabsorbent polymer, a mean absorbency under a pressure of 0.3 psi (0.3 AUP) for a physiological saline solution (0.9 wt% aqueous sodium chloride solution) for 1 hour is 29 g/g or more, or 29.3 g/g or more, or 29.5 g/g or more, or 30 g/g or more, and 40 g/g or less, or 35 g/g or less, or 32 g/g or less. Further, a standard deviation of the absorbency under a pressure of 0.3 psi is 1 or less, or 0.7 or less, or 0.5 or less. As the standard deviation is smaller, it is better, and there is no practical limitation on the lower limit, but it may be, for example, 0.1 or more, or 0.2 or more. Detailed measurement method and conditions for 0.3 AUP will be described in detail in Experimental Example below.

In addition, when an inorganic material such as silica is further added in the cooling and hydrating step during the preparation of the superabsorbent polymer, high anti-caking efficiency may be exhibited.

Specifically, the superabsorbent polymer has an average anti-caking efficiency (A/C) of 85% or more, as calculated according to the following Equation 2, and a standard deviation thereof is 10 or less. More specifically, a mean anti-caking efficiency (A/C) is 85% or more, or 90% or more, or 95% or more. More specifically, the mean anti-caking efficiency (A/C) is 85% or more, or 90% or more, or 95% or more. As the anti-caking efficiency value is higher, it is better, and there is no practical limitation on the upper limit, but it may be, for example, 100% or less, or 98% or less. Further, a standard deviation of the anti-caking efficiency is 10 or less, or 9.5 or less, or 9 or less. As the standard deviation value is smaller, it is better, and there is no practical limitation on the lower limit, but it may be, for example, 1 or more, or 5 or more.

[Equation 2]

$$\text{Anti-caking efficiency (\%)} = \frac{S_1}{(S_2 - W_5) + S_1} * 100$$

In the equation, $W_5$ represents the weight (g) of a Petri dish with a diameter of 90 mm and a height of 15 mm,

Si represents the weight (g) of the superabsorbent polymer sample dropped on A4 paper, which is measured as follows: 2±0.01 g of the superabsorbent polymer sample is evenly applied to the Petri dish weighed as $W_5$, and then the dish, to which the sample is applied, is placed for 10 minutes in a constant temperature and humidity chamber set at a temperature of 40°C and a humidity of 80%RH, and then the dish is taken out and turned upside down on A4 paper, and 5 minutes later, the weight (g) of the superabsorbent polymer sample dropped on the A4 paper is measured, and

$S_2$ represents the weight (g) of the Petri dish at the time of measuring Si.

Accordingly, the above-described superabsorbent polymer may be appropriately used for sanitary materials

such as diapers, particularly, ultra-thin sanitary materials having a reduced content of pulp, etc.

Hereinafter, preferred exemplary embodiments are provided for better understanding of the present invention. However, the following exemplary embodiments are only for illustrating the present invention, and the content of the present invention is not limited by the following exemplary embodiments.

**Preparation Example 1**

**Preparation of water-containing gel polymer**

100 g of acrylic acid, 0.35 g of pentaerythritol allyl ether as an internal crosslinking agent, and 226 g of water were mixed in a 2L glass container equipped with a stirrer and a thermometer under stirring. At this time, the reaction temperature was maintained at 5°C. Nitrogen of 1000 cc/min was injected into the resulting mixture for 1 hour. Thereafter, as polymerization initiators, 1.3 g of 0.3% aqueous hydrogen peroxide solution, 1.5 g of 1% aqueous ascorbic acid solution, and 3.0 g of 2% aqueous 2,2'-azobis amidinopropane dihydrochloride solution were injected, and at the same time, 1.5 g of 0.01% aqueous iron sulfate solution as a reducing agent was added and mixed. After the polymerization reaction in the resulting mixture started and the temperature of the polymer reached 85°C, the polymerization was allowed in an oven at 90±2°C for about 6 hours to prepare a water-containing gel polymer (water content: 70% by weight, based on a total weight of the water-containing gel polymer).

**Preparation of water-containing superabsorbent polymer particles**

100 g of the water-containing gel polymer thus obtained was subjected to micronization by passing four times through a micronizer (F200, Karl Schnell) equipped with a perforated plate containing a number of holes with a hole size of 6 mm while rotating the micronizer at 1500 rpm. At this time, no additives were added in the first pass, 400 g of 32% aqueous NaOH solution was added in the second pass, 37.5 g of 15% aqueous $Na_2SO_4$ solution was added in the third pass, and an aqueous solution (1.5 w%), in which glycerol monolaurate (GML) was dissolved in water at 60°C, was added as a surfactant in the fourth pass in an amount of 0.4 parts by weight, based on 100 parts by weight of the water-containing gel polymer. As a result, water-containing superabsorbent polymer particles were obtained (water content: 68% by weight, based on a total weight of the water-containing superabsorbent polymer particles).

**Preparation of dry superabsorbent polymer particles**

The water-containing superabsorbent polymer particles resulting from the micronization were introduced into a rotary kiln moving type dryer (manufactured by WOONGBI MACHINERY CO., LTD.), and then dried under stirring at 150 °C at a speed of 100 rpm for 60 minutes to obtain dry superabsorbent polymer particles (water content: 11% by weight, based on a total weight of the dry superabsorbent polymer particles).

**Formation of surface-crosslinked layer**

Next, to 100 g of the dry superabsorbent polymer particles, a surface crosslinking solution prepared by mixing 4 g of water, 6 g of methanol, 0.30 g of ethylene glycol diglycidyl ether (Glyether® EJ-1030, a product of JSI), 0.1 g of propylene glycol, and 0.2 g of aluminum sulfate was added and mixed for 1 minute, and a surface crosslinking reaction was allowed at 140°C for 50 minutes to prepare a surface-crosslinked superabsorbent polymer.

**Preparation Example 2**

A surface-crosslinked superabsorbent polymer was obtained in the same manner as in Preparation Example 1, except that during preparation of the water-containing gel polymer of Preparation Example 1, 100 g of acrylic acid, 140 g of 31.5 wt% sodium hydroxide (NaOH) solution, 0.20 g of polyethylene glycol diacrylate, 0.12 g of sodium persulfate as a thermal polymerization initiator, 0.01 g of diphenyl(2,4,6-trimethylbenzoyl)phosphine oxide as a photopolymerization initiator, and 40 g of water were mixed to prepare a monomer composition, which was placed in a square reaction vessel of 30 cm in width and 30 cm in height, and a polymerization reaction was allowed for 60 seconds by irradiating UV at a density of 10 $mW/cm^2$ to prepare a water-containing gel polymer.

**Preparation Example 3**

A surface-crosslinked superabsorbent polymer was obtained in the same manner as in Preparation Example 1, except that during preparation of the water-containing gel polymer of Preparation Example 1, glycerol monostearate

(GMS) was used, instead of GML, as a surfactant.

**Example 1**

The surface-crosslinked superabsorbent polymer prepared in Preparation Example 1 was subjected to a cooling process under conditions of Table 1 below.

Specifically, the surface-crosslinked superabsorbent polymer prepared in Preparation Example was introduced into a spade-type cooler having a structure of FIG. 1, and then cooling air was injected through a nozzle provided inside the cooler to perform the cooling process. At this time, the temperature of the cooling air fed into the cooler was 35°C, and the feeding speed was 0.1 $m^3$/h/kg, based on 1 kg of the surface-crosslinked superabsorbent polymer. Further, during the cooling process, water was injected through a nozzle separately provided inside the cooler to perform the hydrating process at the same time. At this time, the temperature of the water was room temperature (25±2°C), and the feeding amount was 5 parts by weight, based on 100 parts by weight of the surface-crosslinked superabsorbent polymer. The rotation speed of the body part was 20 revolutions per minute (20 rpm).

As a result, after recovering the cooled and hydrated superabsorbent polymer particles, they were classified and separated into normal superabsorbent polymer particles having a particle diameter of 150 μm to 850 μm and coarse particles having a particle diameter of more than 850 μm. The separated coarse particles were pulverized once using a roll-mill, and then mixed with the normal superabsorbent polymer particles to prepare a superabsorbent polymer.

**Example 2**

A cooling process was performed using the spade-type cooler in the same manner as in Example 1, except that fumed silica (Aerosil200, a product of EVONIK) as an additive was injected into a separate inlet to be mixed with the surface-crosslinked superabsorbent polymer introduced into the cooler during the cooling process, as in Table 1 below. At this time, temperature of the cooling air fed into the cooler was 35°C, and a feeding speed was 0.1 $m^3$/h/kg, based on 1 kg of the surface-crosslinked superabsorbent polymer. The rotation speed of the body part was 20 revolutions per minute (20 rpm). Further, during the cooling process, water and fumed silica (Aerosil200, a product of EVONIK) were injected through nozzles separately provided inside the cooler, respectively. At this time, temperature of the water was room temperature (25±2°C), and the feeding amount was 5 parts by weight, based on 100 parts by weight of the surface-crosslinked superabsorbent polymer. Further, the fumed silica was injected in an amount of 0.1 part by weight, based on 100 parts by weight of the superabsorbent polymer.

As a result, after recovering the cooled and hydrated superabsorbent polymer particles, they were classified and separated into normal superabsorbent polymer particles having a particle diameter of 150 μm to 850 μm and coarse particles having a particle diameter of more than 850 μm. The separated coarse particles were pulverized once using a roll-mill, and then mixed with the normal superabsorbent polymer particles to prepare a superabsorbent polymer.

**Examples 3 to 7**

Each superabsorbent polymer was prepared in the same manner as in Example 1, except that the processes were performed under the conditions of Table 1 below.

**Comparative Example 1**

A cooling process was performed by introducing the surface-crosslinked superabsorbent polymer particles prepared in Preparation Example 1 into a paddle-type cooler (NPD-14W™, a product of Nara), injecting water at room temperature (25±2°C) in an amount of 5 parts by weight, based on 100 parts by weight of the surface-crosslinked superabsorbent polymer, without a nozzle in a double jacket inside the paddle-type cooler, and mixing them by operating the paddles at a speed of 10 revolutions per minute (10 rpm), as in Table 1 below (no silica injected). After the cooling step, a superabsorbent polymer was prepared in the same manner as in Example 1, except that classification, pulverization of coarse particles, and mixing with the normal superabsorbent polymer particles were not performed.

**Comparative Example 2**

A superabsorbent polymer was prepared in the same manner as in Example 1, except that a cooling process was performed by introducing the surface-crosslinked superabsorbent polymer particles prepared in Preparation Example 1 into a paddle-type cooler (NPD-14W™, a product of Nara), injecting water at room temperature (25±2°C) in an amount of 5 parts by weight, based on 100 parts by weight of the surface-crosslinked superabsorbent polymer, into a double jacket through a nozzle provided inside the paddle-type cooler, and mixing them by operating the paddles at a speed

of 10 revolutions per minute (10 rpm), as in Table 1 below.

**Comparative Example 3**

A cooling process was performed by introducing the surface-crosslinked superabsorbent polymer particles prepared in Preparation Example 1 into a paddle-type cooler, injecting water at room temperature (25±2°C) in an amount of 5 parts by weight, based on 100 parts by weight of the surface-crosslinked superabsorbent polymer, into a double jacket through a nozzle provided inside the paddle-type cooler (NPD-14W™, a product of Nara), and mixing them by operating the paddles at a speed of 10 revolutions per minute (10 rpm), as in Table 1 below.

After completion, the cooled superabsorbent polymer particles were introduced into a Ploughshare-type mixer (CoriMix®CM, a product of Leodige), fumed silica (Aerosil200, a product of EVONIK) was introduced in an amount of 0.1 part by weight, based on 100 parts by weight of the superabsorbent polymer, and mixed by operating the Ploughshare at a speed of 200 revolutions per minute (200 rpm).

The resulting mixture was classified and separated into normal superabsorbent polymer particles having a particle diameter of 150 μm to 850 μm and coarse particles having a particle diameter of more than 850 μm. The separated coarse particles were pulverized once using a roll-mill, and then mixed with the normal superabsorbent polymer particles to prepare a superabsorbent polymer.

[Table 1]

| | | Example | | | | | | | Comparative Example | | |
|---|---|---|---|---|---|---|---|---|---|---|---|
| | | 1 | 2 | 3 | 4 | 5 | 6 | 7 | 1 | 2 | 3 |
| Kind of surface-crosslinked superabsorbent polymer | | Preparation Example 1 | Preparation Example 1 | Preparation Example 1 | Preparation Example 1 | Preparation Example 1 | Preparation Example 2 | Preparation Example 3 | Preparation Example 1 | Preparation Example 1 | Preparation Example 1 |
| Cooling process | Blade type | Spade-type | Spade-type | Spade-type | Spade-type | Spade-type | Spade-type | Spade-type | Paddle-type | Paddle-type | Paddle-type |
| | Cooling type | Cooling air and water injected | Cooling air and water injected | Cooling air and water injected | Cooling air and water injected | Cooling air and water injected | Cooling air and water injected | Cooling air and water injected | Cooling water injected into double jacket | Cooling water injected into double jacket | Cooling water injected into double jacket |
| | Nozzle for water injection | Provided | Provided | Provided | Provided | Provided | Provided | Provided | Not provided | Provided | Provided |
| | Temperature of cooling air/ Injection amount | 35°C/ 0.1$m^3$/h/kg | 35°C/ 0.1$m^3$/h/kg | 35°C/ 0.2$m^3$/h/kg | 35°C/ 0.1$m^3$/h/kg | 35°C/ 0.1$m^3$/h/kg | 35°C/ 0.1$m^3$/h/kg | 35°C/ 0.1$m^3$/h/kg | Not injected | Not injected | Not injected |
| | Temperature of water/ Injection amount | Room temperature / 5 parts by weight | Room temperature / 5 parts by weight | Room temperature / 5 parts by weight | Room temperature / 7 parts by weight | Room temperature / 5 parts by weight | Room temperature / 5 parts by weight | Room temperature / 5 parts by weight | Room temperature / 5 parts by weight | Room temperature / 5 parts by weight | Room temperature / 5 parts by weight |
| | Silica injection (part by weight*) | Not injected | Injected (0.1) | Injected (0.15) | Injected (0.1) | Injected (0.1) | Injected (0.1) | Injected (0.1) | Not injected | Not injected | Not injected |
| | Rotation of body part of cooler / rotation speed | Rotation/ 20 rpm | Rotation/ 20 rpm | Rotation/ 20 rpm | Rotation/ 20 rpm | Rotation/ 30 rpm | Rotation/ 20 rpm | Rotation/ 20 rpm | Not rotatable | Not rotatable | Not rotatable |

(continued)

| | | Example | | | | | | | Comparative Example | | |
|---|---|---|---|---|---|---|---|---|---|---|---|
| | | 1 | 2 | 3 | 4 | 5 | 6 | 7 | 1 | 2 | 3 |
| Sili ca mi xin g pro ces s afte r coo lin g | Mixing proce ss (mixi ng metho d/ rotati on speed ) | Not condu cted | Not condu cted | Not condu cted | Not condu cted | Not condu cted | Not condu cted | Not condu cted | Not condu cted | Not condu cted | Cond ucted (Plou ghsha re/ 200rp m) |
| | Silica inj ecti on (part by weigh t*) | Not inject ed | Not inject ed | Not inject ed | Not inject ed | Not inject ed | Not inject ed | Not inject ed | Not inject ed | Not inject ed | Inject ed (0.1) |

In the above Table, "parts by weight" is a relative content ratio, based on 100 parts by weight of the surface-crosslinked superabsorbent polymer.

**Experimental Example 1**

The final superabsorbent polymers prepared in Examples and Comparative Examples were evaluated for absorption performances by the following methods.

Unless otherwise indicated, all of the following physical properties were evaluated at constant temperature and constant humidity (23±1°C, relative humidity 50±10%), and physiological saline or saline means 0.9% by weight of an aqueous sodium chloride (NaCl) solution.

In addition, unless otherwise indicated, evaluation of the physical properties of the superabsorbent polymers finally prepared was performed on the polymers having a particle diameter of 150 μm to 850 μm, which were classified through the ASTM standard sieves.

(1) Water content

The water content of the superabsorbent polymers finally prepared in Examples and Comparative Examples was measured. The water content is the amount of water occupied with respect to a total weight of the superabsorbent polymer, and was calculated according to the following Equation 1.

In detail, the weight loss due to evaporation of moisture in the superabsorbent polymer during the process of drying by raising the temperature of the superabsorbent polymer through infrared heating was measured and calculated. At this time, the drying conditions were determined as follows: the drying temperature was increased from room temperature to about 180°C and then the temperature was maintained at 180°C, and the total drying time was set to 40 minutes, including 5 minutes for the temperature rising step. The weight of the superabsorbent polymer before/after drying was measured, respectively and the water content was calculated according to the following Equation 1.

[Equation 1]

$$\text{Water content (\% by weight)} = [(Ao-At) / Ao ]X100$$

In the equation, At represents the weight of the superabsorbent polymer after drying, and Ao represents the weight of the superabsorbent polymer before drying.

(2) Centrifuge retention capacity (CRC)

The water retention capacity by absorption capacity under no load was measured for the superabsorbent polymers finally prepared in Examples and Comparative Examples in accordance with European Disposables and Nonwovens Association standard EDANA WSP 241.3.

In detail, each superabsorbent polymer $W_0$(g) (about 0.2 g) obtained in Examples and Comparative Examples was put in a nonwoven fabric-made bag, followed by sealing. The bag was immersed in physiological saline (0.9 wt%) at room temperature. After 30 minutes, the bag was dehydrated by using a centrifuge at 250 G for 3 minutes, and then the weight $W_2$ (g) of the bag was measured. Further, after carrying out the same operation without using the polymer, the weight $W_1$ (g) of the bag was measured.

CRC (g/g) was calculated using the obtained weights according to the following Equation 3:

[Equation 3]

$$CRC\ (g/g) = \{[W_2(g) - W_1(g)]/W_0(g)\} - 1$$

(3) Absorbency under Pressure (AUP)

The absorbency under pressure of 0.3 psi of the superabsorbent polymers finally prepared in Examples and Comparative Examples was measured according to EDANA WSP 242.3.

In detail, a 400 mesh stainless screen was installed at the bottom of a plastic cylinder having an inner diameter of 25 mm. $W_0$(g) (0.90 g) of the superabsorbent polymer was uniformly scattered on the stainless screen under conditions of room temperature and a humidity of 50%. Then, a piston capable of providing a load of 0.3 psi uniformly was designed

so that the outer diameter was slightly smaller than 25 mm and thus it could move freely up and down without any gap with the inner wall of the cylinder. At this time, the weight $W_3$(g) of the device was measured.

A glass filter having a diameter of 90 mm and a thickness of 5 mm was placed in a Petri dish having a diameter of 150 mm, and a physiological saline solution composed of 0.9 wt% sodium chloride was poured until the surface level became equal to the upper surface of the glass filter. Then, a sheet of filter paper having a diameter of 90 mm was placed on the glass filter. The measuring device was placed on the filter paper, so that the liquid was absorbed under load for one hour. After one hour, the measuring device was lifted and the weight $W_4$(g) was measured.

Using the respective weights thus obtained, the absorbency under pressure (g/g) was calculated according to the following Equation 4.

[Equation 4]

$$AUP(g/g) = [W_4(g) - W_3(g)]/W_0(g)$$

The above measurement was repeated five times, and the mean value and standard deviation were obtained.

(4) Content of coarse particles having particle diameter of more than 850 μm (#20)

The superabsorbent polymer particles obtained after the cooling and hydrating step in Examples and Comparative Examples were classified using ASTM standard sieves having a mesh size of 850 μm (20 mesh), 600 μm (30 mesh), 300 μm (50 mesh), or 150 μm (100 mesh), and the weight of coarse particles having a particle diameter of more than 850 μm was measured, and then a weight ratio of the coarse particles with respect to a total weight of the cooled and hydrated superabsorbent polymer particles was expressed as percentage (% by weight).

[Table 2]

| | | Unit | Example | | | | | | | Comparative Example | | |
|---|---|---|---|---|---|---|---|---|---|---|---|---|
| | | | 1 | 2 | 3 | 4 | 5 | 6 | 7 | 1 | 2 | 3 |
| CRC | | g/g | 36.7 | 37.2 | 36.9 | 36.5 | 37.2 | 37.7 | 37.1 | 37.1 | 36.6 | 37.4 |
| 0.3 AUP | Mean | g/g | 31.7 | 30.1 | 30.5 | 30.0 | 30.3 | 29.3 | 30.8 | 31.5 | 28.9 | 27.2 |
| | Standard deviation | | 0.3 | 0.7 | 0.3 | 0.3 | 0.2 | 0.5 | 0.4 | 0.3 | 0.4 | 1.2 |
| Water content | | % by weight | 1.7 | 1.9 | 1.4 | 2.6 | 1.8 | 1.7 | 1.8 | 0.3 | 1.4 | 1.5 |
| Content of coarse particles | | % by weight | 0.3 | 0.5 | 0.3 | 0.7 | 0.1 | 0.2 | 0.3 | 0.0 | 5.4 | 5.7 |

As a result of the experiment, as compared to Comparative Example 1, Example 1 had the high water content while showing no deterioration in absorption performances such as CRC and AUP. In addition, as compared to Comparative Example 2, Example 1 showed the reduced content of coarse particles having a particle diameter of more than 850 μm, and exhibited excellent effects in terms of the absorption performances such as CRC and AUP.

In addition, as compared to Comparative Example 3, Example 2 showed the reduced content of coarse particles having a particle diameter of more than 850 μm, and exhibited excellent effects in terms of the absorption performances such as CRC and AUP. As compared to Comparative Example 3, Example 2 also showed the small deviation in the physical properties of AUP.

**Experimental Example 2**

In order to evaluate the anti-caking effect according to addition of the inorganic material during the preparation of the superabsorbent polymer, the final superabsorbent polymers prepared using the inorganic material in Examples and Comparative Examples were measured for anti-caking (A/C) efficiency by the following method.

<Measuring device>

- Electronic balance (precision: 0.01 g)
- Constant temperature and humidity chamber (Temperature: 40°C, Humidity: 80%RH)
- Petri dish (ø: 90 mm, height: 15 mm)
- Stop watch
- A4 paper

<Measuring method>

① First, the weight ($W_5$) of the prepared Petri dish was measured.
② Next, 2±0.01 g of the superabsorbent polymer prepared in Example or Comparative Example as a sample was evenly applied on the weighed Petri dish.
③ Thereafter, the Petri dish containing the superabsorbent polymer sample was placed in the constant temperature and humidity chamber set at a temperature of 40°C and a humidity of 80%RH, and left for 10 minutes.
④ After 10 minutes, the Petri dish was taken out from the constant temperature and humidity chamber, and turned upside down on the prepared A4 paper, and left for 5 minutes.
(5) After 5 minutes, the weight (Si) of the superabsorbent polymer sample dropped on the A4 paper and the weight ($S_2$) of the Petri dish at this time were measured, respectively, and then the anti-caking efficiency was calculated according to the following Equation 2, which was rounded to one decimal place.

[Equation 2]

$$\text{Anti-caking efficiency (\%)} = \frac{S_1}{(S_2 - W_5) + S_1} * 100$$

In the equation, $W_5$ represents the weight (g) of a Petri dish with a diameter of 90 mm and a height of 15 mm,

$S_1$ represents the weight (g) of the superabsorbent polymer sample dropped on A4 paper, which is measured as follows: 2±0.01 g of the superabsorbent polymer sample is evenly applied to the Petri dish weighed as $W_5$, and then the dish, to which the sample is applied, is placed for 10 minutes in a constant temperature and humidity chamber set at a temperature of 40°C and a humidity of 80%RH, and then the dish is taken out and turned upside down on A4 paper, and 5 minutes later, the weight (g) of the superabsorbent polymer sample dropped on the A4 paper is measured, and

$S_2$ represents the weight (g) of the Petri dish at the time of measuring Si.

The above measurement was repeated five times, and the mean value and standard deviation were obtained.

[Table 3]

| | | Unit | Example 2 | Example 3 | Example 4 | Example 5 | Example 6 | Example 7 | Comparative Example 3 |
|---|---|---|---|---|---|---|---|---|---|
| A/C efficiency | Mean | % | 93 | 96 | 93 | 95 | 91 | 96 | 66 |
| | Standard deviation | | 7.9 | 6.7 | 9.2 | 7.7 | 9.1 | 6.9 | 27.3 |

As a result of the experiment, as compared to Comparative Example 3, Examples 2 to 7 showed significantly increased anti-caking efficiency and also the small deviation in physical properties.

[Reference numerals]

1: Body part
1a: Rotating part
1b: Fixed part
1c: Superabsorbent polymer inlet
1d: Superabsorbent polymer outlet
1e: Additive inlet
2a: Cooling air input nozzle
2b: Water input nozzle
3: Spade-type blade
4: Driving motor
10: Spade-type cooler
20: Superabsorbent polymer particles

## Claims

1. A method for preparing a superabsorbent polymer, comprising:

   forming a water-containing gel polymer, in which a water-soluble ethylenically unsaturated monomer having acidic groups and an internal crosslinking agent are crosslinking-polymerized,
   preparing water-containing superabsorbent polymer particles by performing micronization of the water-containing gel polymer,
   preparing dry superabsorbent polymer particles by drying the water-containing superabsorbent polymer particles,
   forming a surface-crosslinked layer on at least a part of a surface of superabsorbent polymer particles by adding a surface crosslinking agent to the dry superabsorbent polymer particles and reacting them with each other, and
   cooling and hydrating the superabsorbent polymer particles, on which the surface-crosslinked layer is formed, using a spade-type cooler,
   wherein the spade-type cooler comprises: a rotatable body part including a transfer space through which the superabsorbent polymer particles on which the surface-crosslinked layer is formed are transferred; two nozzles installed in the body part, each injecting cooling air and water into the transfer space; one or more spade-type blades which are installed on an inner wall of the body part to be operable up and down and to scoop up the superabsorbent polymer particles, on which the surface-crosslinked layer is formed, in the transfer space; and a driving motor which is connected to the body part and provides a driving force, wherein the cooling and hydrating of the superabsorbent polymer particles, on which the surface-crosslinked layer is formed, are performed by scooping up the superabsorbent polymer particles, on which the surface-crosslinked layer is formed, by the spade-type blades in the body part, and then dropping the scooped-up superabsorbent polymer particles in the gravity direction by rotation of the body part to be brought into contact with the cooling air and the water which are injected into the transfer space of the body part.

2. The method for preparing a superabsorbent polymer according to claim 1, wherein temperature of the cooling air is 10°C to 60°C, and the cooling air is introduced at a speed of 0.01 $m^3$/h/kg to 0.25 $m^3$/h/kg, based on 1 kg of a feeding amount of the superabsorbent polymer particles on which the surface-crosslinked layer is formed.

3. The method for preparing a superabsorbent polymer according to claim 1, wherein temperature of the water is 10°C to 60°C, and the water is introduced in an amount of 2 parts by weight to 20 parts by weight, based on 100 parts by weight of the superabsorbent polymer particles on which the surface-crosslinked layer is formed.

4. The method for preparing a superabsorbent polymer according to claim 1, wherein the body part is rotated at a speed of 5 revolutions to 50 revolutions per minute.

5. The method for preparing a superabsorbent polymer according to claim 1, wherein during the cooling and hydrating, an inorganic material is further mixed, and the inorganic material is introduced through an additive nozzle which is installed in the body part to introduce the additive into the space of the body part, or introduced after being mixed

with the superabsorbent polymer.

6. The method for preparing a superabsorbent polymer according to claim 5, wherein the inorganic material is one or more selected from the group consisting of silica, clay, alumina, silica-alumina composite, titania, zinc oxide, and aluminum sulfate.

7. The method for preparing a superabsorbent polymer according to claim 1, wherein the step of forming the water-containing gel polymer is performed

by the step of neutralizing at least a part of the acidic groups of the water-soluble ethylenically unsaturated monomer, and the step of forming the water-containing gel polymer by performing polymerization of a monomer composition comprising the water-soluble ethylenically unsaturated monomer having at least partially neutralized acidic groups, an internal crosslinking agent, and a polymerization initiator, or
by the step of forming a polymer, in which the water-soluble ethylenically unsaturated monomer having acidic groups and the internal crosslinking agent are crosslinking-polymerized, by performing polymerization of the monomer composition comprising the water-soluble ethylenically unsaturated monomer having acidic groups, the internal crosslinking agent, and the polymerization initiator, and the step of forming the water-containing gel polymer by neutralizing at least part of the acidic groups of the polymer.

8. The method for preparing a superabsorbent polymer according to claim 1, wherein the drying is performed in a moving type.

9. The method for preparing a superabsorbent polymer according to claim 1, wherein the drying is performed using a horizontal-type mixer dryer, a rotary kiln, a rotary dryer, a paddle dryer, or a steam tube dryer.

10. The method for preparing a superabsorbent polymer according to claim 1, wherein the micronization is performed by a micronizer comprising:

a body part comprising a transfer space through which the water-containing gel polymer is transferred;
a screw member which is rotatably installed inside the transfer space to transfer the water-containing gel polymer;
a driving motor providing a rotational driving force for the screw member;
a cutter member which is installed in the body part to pulverize the water-containing gel polymer; and
a perforated plate having a plurality of holes formed therein, which discharges the water-containing gel polymer pulverized by the cutter member to an outside of the body part.

11. The method for preparing a superabsorbent polymer according to claim 1, wherein the micronization is performed twice or more.

12. The method for preparing a superabsorbent polymer according to claim 1, wherein the micronization is performed in the presence of a surfactant.

13. The method for preparing a superabsorbent polymer according to claim 12, wherein the surfactant comprises a compound represented by the following Chemical Formula 2 or a salt thereof:

[Chemical Formula 2]

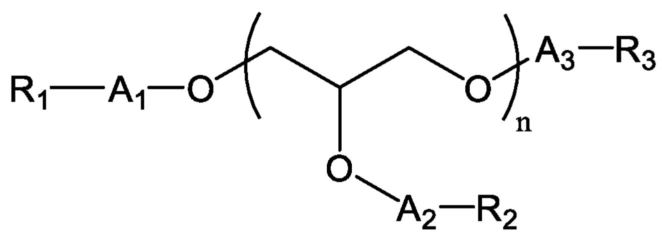

wherein, in Chemical Formula 2,

$A_1$, $A_2$ and $A_3$ are each independently a single bond, carbonyl,

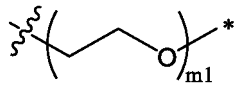

,

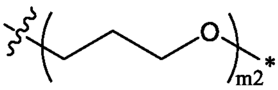 or 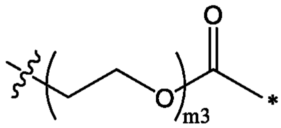,

provided that one or more thereof are carbonyl or

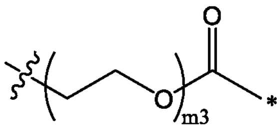,

wherein m1, m2 and m3 are each independently an integer of 1 to 8,

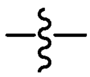

is linked to an adjacent oxygen atom, 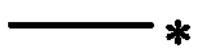 is linked to adjacent $R_1$, $R_2$, or $R_3$,
$R_1$, $R_2$ and $R_3$ are each independently hydrogen, a linear or branched alkyl having 6 to 18 carbon atoms, or a linear or branched alkenyl having 6 to 18 carbon atoms, and
n is an integer of 1 to 9.

**14.** The method for preparing a superabsorbent polymer according to claim 1, wherein during the micronization, one or more additives selected from the group consisting of metal hydroxides and metal salts are added.

**15.** The method for preparing a superabsorbent polymer according to claim 14, wherein the metal hydroxide is sodium hydroxide or potassium hydroxide, and the metal salt is sodium sulfite, sodium persulfate, potassium persulfate, or ammonium persulfate.

**16.** The method for preparing a superabsorbent polymer according to claim 1, wherein a content of coarse particles having a particle diameter of more than 850 μm is 3% by weight or less, based on a total weight of the resulting superabsorbent polymer particles obtained after the cooling and hydrating step.

**17.** The method for preparing a superabsorbent polymer according to claim 1, further comprising the step of classifying the resulting superabsorbent polymer particles obtained after the cooling and hydrating step to separate into coarse particles having a particle diameter of more than 850 μm and normal superabsorbent polymer particles having a particle diameter of 150 μm to 850 μm, pulverizing the separated coarse particles, and then mixing with the normal superabsorbent polymer particles.

**18.** The method for preparing a superabsorbent polymer according to claim 1, wherein the superabsorbent polymer satisfies the following conditions of (i) to (iii):

(i) a water content: 1.2 % by weight to 5% by weight, based on a total weight of the superabsorbent polymer
(ii) a centrifuge retention capacity measured according to EDANA WSP 241.3: 30 g/g to 45 g/g
(iii) a mean absorbency under a pressure of 0.3 psi measured according to EDANA WSP 242.3: 29 g/g to 40 g/g, and a standard deviation of the absorbency under a pressure of 0.3 psi: 1 or less.

【FIG. 1】

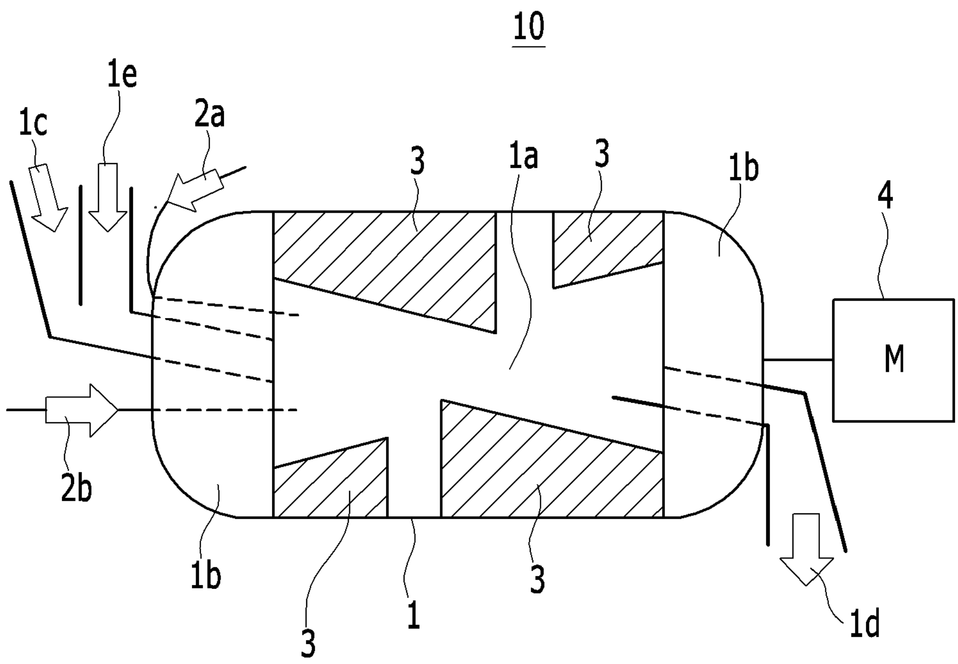

【FIG. 2】

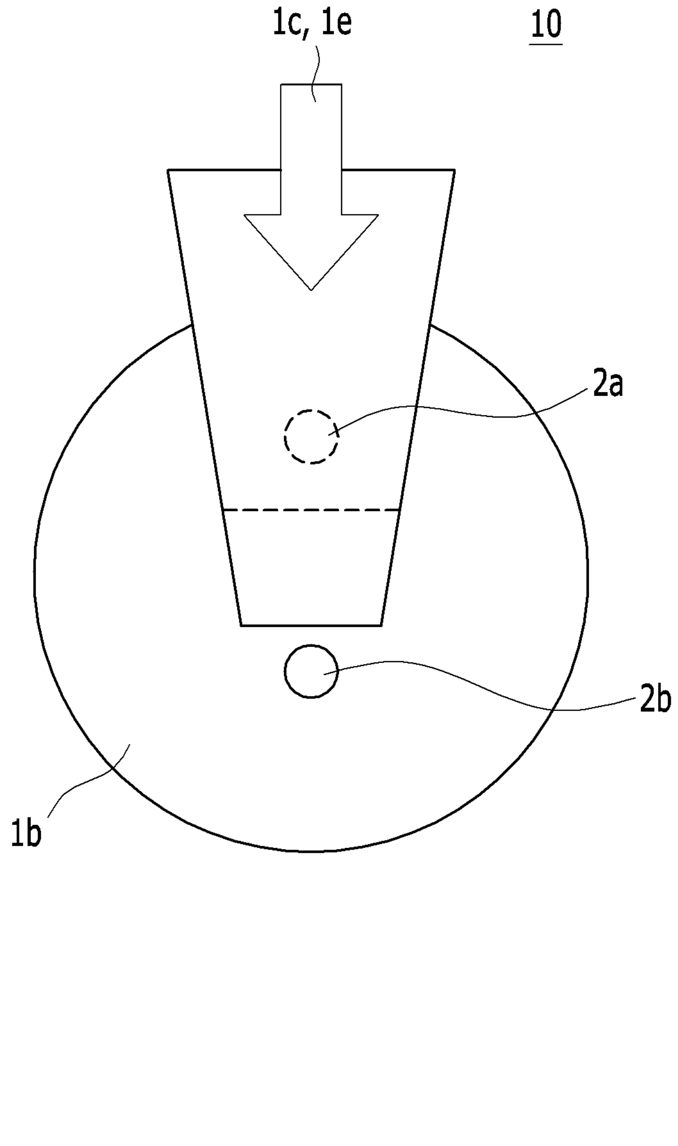

【FIG. 3】

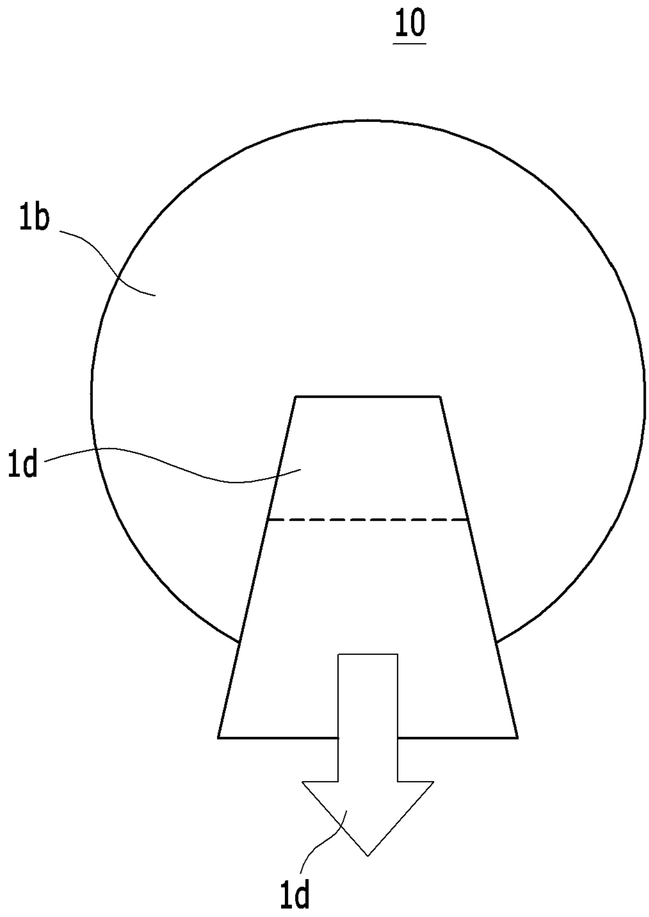

【FIG. 4】

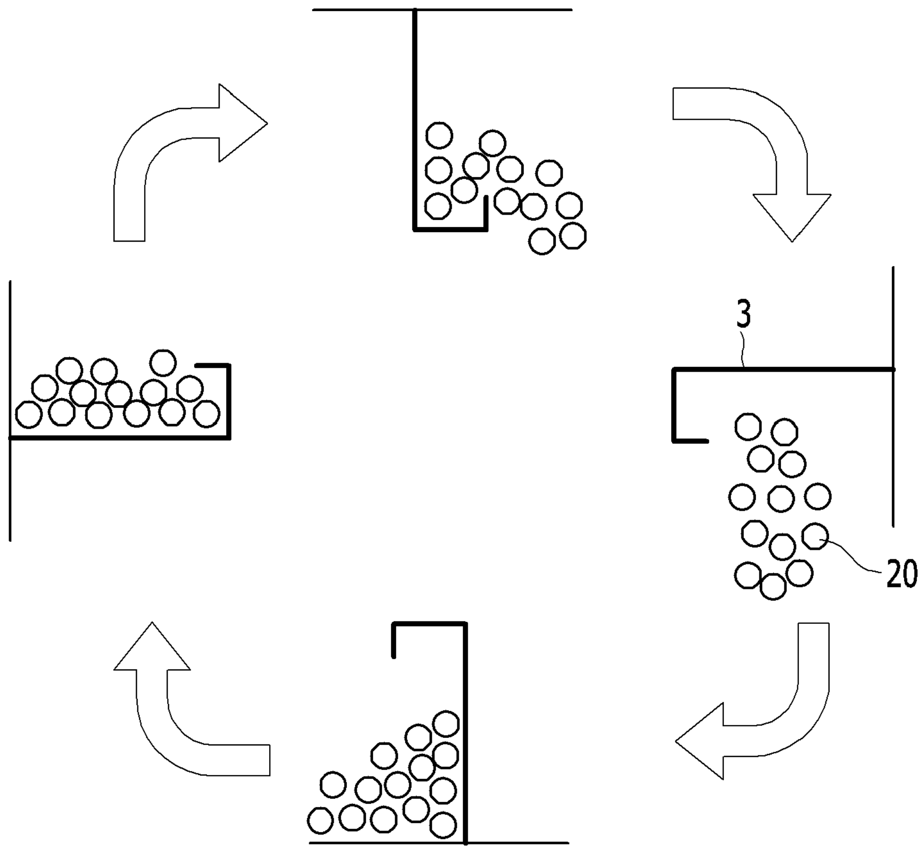

## INTERNATIONAL SEARCH REPORT

International application No. **PCT/KR2022/008693**

**A. CLASSIFICATION OF SUBJECT MATTER**

**C08J 3/24**(2006.01)i; **C08J 3/12**(2006.01)i; **C08J 3/075**(2006.01)i; **C08K 3/22**(2006.01)i; **B29B 9/12**(2006.01)i; **C08F 2/01**(2006.01)i

According to International Patent Classification (IPC) or to both national classification and IPC

**B. FIELDS SEARCHED**

Minimum documentation searched (classification system followed by classification symbols)

C08J 3/24(2006.01); A61F 5/44(2006.01); B01J 20/26(2006.01); C08F 10/02(2006.01); C08F 2/10(2006.01); C08J 3/075(2006.01); C08J 3/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(superabsorbent polymer, SAP), 냉각(cooling), 가수(adding water), 함수율(moisture content), 스페이드형 냉각기(spade type cooler), 블레이드(blade)

**C. DOCUMENTS CONSIDERED TO BE RELEVANT**

| Category* | Citation of document, with indication, where appropriate, of the relevant passages | Relevant to claim No. |
|---|---|---|
| A | JP 5619010 B2 (NIPPON SHOKUBAI CO., LTD.) 05 November 2014 (2014-11-05) See claims 1-3; paragraph [0016]; and figures 1 and 2. | 1-18 |
| A | KR 10-2015-0141425 A (LG CHEM, LTD.) 18 December 2015 (2015-12-18) See claims 1-8; and paragraphs [0071]-[0075]. | 1-18 |
| A | KR 10-2019-0077540 A (NIPPON SHOKUBAI CO., LTD.) 03 July 2019 (2019-07-03) See entire document. | 1-18 |
| A | JP 2004-300425 A (NIPPON SHOKUBAI CO., LTD.) 28 October 2004 (2004-10-28) See entire document. | 1-18 |
| A | KR 10-2018-0127377 A (SUMITOMO SEIKA CHEMICALS CO., LTD.) 28 November 2018 (2018-11-28) See entire document. | 1-18 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 September 2022** | **23 September 2022** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2022/008693**

| Patent document cited in search report | Publication date (day/month/year) | Patent family member(s) | Publication date (day/month/year) |
|---|---|---|---|
| JP 5619010 B2 | 05 November 2014 | CN 102341435 A | 01 February 2012 |
| | | CN 102341435 B | 20 April 2016 |
| | | CN 102482433 A | 30 May 2012 |
| | | CN 102482433 B | 28 May 2014 |
| | | CN 102482434 A | 30 May 2012 |
| | | CN 102482434 B | 04 February 2015 |
| | | EP 2404954 A1 | 11 January 2012 |
| | | EP 2404954 B1 | 22 April 2015 |
| | | EP 2471843 A1 | 04 July 2012 |
| | | EP 2471843 A4 | 25 February 2015 |
| | | EP 2471843 B1 | 17 August 2016 |
| | | EP 2471844 A1 | 04 July 2012 |
| | | EP 2471844 A4 | 14 January 2015 |
| | | EP 2471844 B1 | 30 March 2016 |
| | | EP 2471845 A1 | 04 July 2012 |
| | | EP 2471845 A4 | 26 February 2014 |
| | | EP 2471845 B1 | 15 February 2017 |
| | | EP 2471846 A1 | 04 July 2012 |
| | | EP 2471846 A4 | 08 July 2015 |
| | | EP 2471846 B1 | 21 December 2016 |
| | | JP 2015-014002 A | 22 January 2015 |
| | | JP 5615801 B2 | 29 October 2014 |
| | | JP 5619011 B2 | 05 November 2014 |
| | | JP 5629688 B2 | 26 November 2014 |
| | | JP 5732396 B2 | 10 June 2015 |
| | | JP 5847260 B2 | 20 January 2016 |
| | | US 2011-0319518 A1 | 29 December 2011 |
| | | US 2012-0157625 A1 | 21 June 2012 |
| | | US 2012-0157635 A1 | 21 June 2012 |
| | | US 2012-0157650 A1 | 21 June 2012 |
| | | US 2012-0172536 A1 | 05 July 2012 |
| | | US 2014-0107293 A1 | 17 April 2014 |
| | | US 8648150 B2 | 11 February 2014 |
| | | US 8859685 B2 | 14 October 2014 |
| | | US 8907021 B2 | 09 December 2014 |
| | | US 9023951 B2 | 05 May 2015 |
| | | US 9138505 B2 | 22 September 2015 |
| | | US 9796820 B2 | 24 October 2017 |
| | | WO 2010-100936 A1 | 10 September 2010 |
| | | WO 2011-024971 A1 | 03 March 2011 |
| | | WO 2011-024972 A1 | 03 March 2011 |
| | | WO 2011-024974 A1 | 03 March 2011 |
| | | WO 2011-024975 A1 | 03 March 2011 |
| KR 10-2015-0141425 A | 18 December 2015 | None | |
| KR 10-2019-0077540 A | 03 July 2019 | CN 109996833 A | 09 July 2019 |
| | | CN 109996833 B | 11 February 2022 |
| | | CN 109996835 A | 09 July 2019 |
| | | EP 3543279 A1 | 25 September 2019 |
| | | EP 3543279 A4 | 19 August 2020 |
| | | EP 3543280 A1 | 25 September 2019 |

Form PCT/ISA/210 (patent family annex) (July 2019)

**INTERNATIONAL SEARCH REPORT**
**Information on patent family members**

International application No.
**PCT/KR2022/008693**

| Patent document cited in search report | Publication date (day/month/year) | Patent family member(s) | Publication date (day/month/year) |
|---|---|---|---|
| | | EP 3543280 A4 | 02 September 2020 |
| | | JP 2019-052285 A | 04 April 2019 |
| | | JP 6800998 B2 | 16 December 2020 |
| | | JP 6913107 B2 | 04 August 2021 |
| | | JP 6918407 B2 | 11 August 2021 |
| | | KR 10-2019-0077541 A | 03 July 2019 |
| | | US 2019-0329219 A1 | 31 October 2019 |
| | | US 2019-0329220 A1 | 31 October 2019 |
| | | WO 2018-092863 A1 | 24 May 2018 |
| | | WO 2018-092864 A1 | 24 May 2018 |
| JP 2004-300425 A | 28 October 2004 | CN 1530384 A | 22 September 2004 |
| | | CN 1530384 C | 11 July 2007 |
| | | EP 1462473 A1 | 29 September 2004 |
| | | EP 1462473 B1 | 06 July 2011 |
| | | EP 1832621 A1 | 12 September 2007 |
| | | EP 1832621 B1 | 08 March 2017 |
| | | JP 4364020 B2 | 11 November 2009 |
| | | US 2004-0181031 A1 | 16 September 2004 |
| | | US 7378453 B2 | 27 May 2008 |
| KR 10-2018-0127377 A | 28 November 2018 | CN 108884238 A | 23 November 2018 |
| | | EP 3438161 A1 | 06 February 2019 |
| | | EP 3438161 A4 | 16 October 2019 |
| | | JP 6912455 B2 | 04 August 2021 |
| | | KR 10-2021-0064436 A | 02 June 2021 |
| | | KR 10-2429796 B1 | 04 August 2022 |
| | | SG 11201808605 WA | 30 October 2018 |
| | | TW 201739801 A | 16 November 2017 |
| | | TW I724136 B | 11 April 2021 |
| | | US 10730028 B2 | 04 August 2020 |
| | | US 11117111 B2 | 14 September 2021 |
| | | US 2019-0105628 A1 | 11 April 2019 |
| | | US 2020-0316549 A1 | 08 October 2020 |
| | | WO 2017-169246 A1 | 05 October 2017 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210079644
- KR 1020210080233
- KR 1020220074732


### Non-patent literature cited in the description


- **REINHOLD SCHWALM.** UV Coatings: Basics, Recent Developments and New Application. Elsevier, 2007, 115
- **ODIAN.** Principle of Polymerization. Wiley, 1981, 203